(19) Europäisches Patentamt
European Patent Office
Office européen des brevets

(11) EP 3 209 818 B1

(12) EUROPÄISCHE PATENTSCHRIFT

(45) Veröffentlichungstag und Bekanntmachung des Hinweises auf die Patenterteilung:
**11.12.2019 Patentblatt 2019/50**

(21) Anmeldenummer: **15785094.2**

(22) Anmeldetag: **23.10.2015**

(51) Int Cl.:
***C25D 15/00** (2006.01)* ***C25D 15/02** (2006.01)*
***B01J 16/00** (2006.01)* ***B01J 37/02** (2006.01)*
***C23C 18/31** (2006.01)*

(86) Internationale Anmeldenummer:
**PCT/EP2015/074657**

(87) Internationale Veröffentlichungsnummer:
**WO 2016/062880 (28.04.2016 Gazette 2016/17)**

# (54) ORGANISCHE PESTIZID-TEILCHEN

ORGANIC PESTICID PARTICLES

PARTICULES PESTICIDES ORGANIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2014 EP 14190359**

(43) Veröffentlichungstag der Anmeldung:
**30.08.2017 Patentblatt 2017/35**

(73) Patentinhaber: **BASF SE**
**67056 Ludwigshafen (DE)**

(72) Erfinder:
- **SEELMANN-EGGEBERT, Hans-Peter**
**67117 Limburgerhof (DE)**
- **URBAN, Tobias**
**64625 Bensheim (DE)**

(74) Vertreter: **BASF IP Association**
**BASF SE**
**G-FLP-C006**
**67056 Ludwigshafen (DE)**

(56) Entgegenhaltungen:
**EP-A1- 1 331 254**
**EP-A1- 2 145 986**
**WO-A1-2005/106106**
**WO-A1-2008/098387**
**WO-A1-2011/012495**
**WO-A1-2011/067329**
**WO-A2-2009/115506**
**DE-A1- 19 534 327**
**US-A1- 2012 034 464**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 209 818 B1

## Beschreibung

Die vorliegende Erfindung betrifft die Veränderung der Oberflächenladung fester, organischer Teilchen gemessen über deren Zeta-Potential mit einem nicht-ampholytischen, quaternierbaren und wasserlöslichen Polymer, wobei das Polymer ausgewählt ist aus der Gruppe bestehend aus Polyethylenimine, Polypropylenimine, sowie Mischungen dieser Polymere, sowie die Verwendung derartig modifizierter Teilchen in organischen Lösemitteln, in Pflanzenschutzformulierungen, i zur Behandlung von Saatgut und zur Behandlung von Pestiziden,.

In der Technik sind vielfältige Einsatzmöglichkeiten für feste Partikel bekannt, die in flüssigen, vorzugsweise wässrigen Medien dispergiert werden. Dazu zählen beispielsweise Farbstoffe, die dispergierte Pigmente enthalten, aber auch dispergierte Füllstoffe in Polymeren oder Dispersionen im Bereich von Pharmaka, Kosmetika bzw. Wasch- und Reinigungsmitteln sind bekannt. Auch bei der Keramik-Herstellung werden Ton-Dispersionen (der sog. Schlicker) eingesetzt. Bei der Flotation, z.B. von Erzen werden ebenfalls Dispersionen verwendet. Ein weiteres technisches Beispiel für Dispersionen tritt bei der Galvanisierung von Metalloberflächen (oder entsprechend vorbereiteter anderer Oberflächen) auf: So wird z.B. Bornitrid (BN) bei der galvanischen Vernickelung von Metalloberflächen in dispergierter Form im Galvanikbad eingesetzt, da das BN dann zusammen mit dem Nickel auf der Metalloberfläche ausfällt und die physikalischen Eigenschaften der Nickelschicht verbessert.

Die Energie zur Herstellung einer Dispersion kann z.B. chemisch, elektrochemisch, elektrisch oder mechanisch (durch Mahlen, mittels Ultraschall etc.) zugeführt werden. Prinzipiell neigen Dispersionen zur Phasentrennung (Sedimentation), so dass eine Stabilisierung mit Emulgatoren, Tensiden oder Schutzkolloiden während ihrer Herstellung und Lagerung vorgenommen wird. Alternativ oder in Ergänzung hierzu wird auch gezielt die elektrostatische Abstoßung gleichsinnig geladener Pigment- bzw. Polymerteilchen ausgenutzt (elektrostatische Stabilisierung).

In der Praxis stellt sich häufig das Problem, dass sich die Teilchen nur schlecht oder gar nicht in einem wässrigen oder sonstigen flüssigen Medium dispergieren lassen. In vielen Fällen benutzt man grenzflächenaktive Stoffe als Dispergiermittel zur Herstellung oder Stabilisierung der Dispersionen. Es besteht daher ein ständiger Bedarf, feste Partikel besser in Flüssigkeiten, vorzugsweise in wässrigen Medien zu dispergieren. Die Schwierigkeit, die bei der Dispergierung, d. h. der Feinverteilung der festen Partikel in dem flüssigen Medium auftritt, ist darin zu sehen, dass die Oberflächenladung an der Oberfläche der Partikel einen gleichmäßigen Einbau in das Lösungsmittel, vorzugsweise Wasser nicht oder nur teilweise zulassen.

Im Stand der Technik sind allerdings bereits Lösungsansätze bekannt. So beschreiben die US 4,098,654 und US 4,302,374 die Verwendung von nichtionischen Tensiden um PTFE-Teilchen zu stabilisieren. In der US 145,517 werden chemische Galvanisierverfahren beschrieben, in denen Tenside auf Basis von organischen nicht-fluorierten Verbindungen benutzt werden, um feinverteilte Feststoffe in einem Galvanisierbad zu stabilisieren. Es besteht allerdings nach wie vor der Bedarf, die Stabilisierung fester Teilchen nicht nur im Bereich galvanischer Bäder zu verbessern, sondern generell das Dispergierverhalten fester Stoffe in flüssigen Medien zu optimieren.

Die EP 2 100 912 A1 schlägt die Modifikation der Oberfläche fester Teilchen mit speziellen Polymeren vor. Dadurch soll es zu einer Umladung der Oberflächenladung fester Teilchen kommen, wodurch wiederum die Dispergiereigenschaften der festen Teilchen in flüssigen Medien verbessert werden. Die EP 2 100 912 A1 verwendet dazu spezielle ampholytische Polymere, in denen eine kationische, quaternierbare Monomerkomponente, v.a. 3-Trimethylammoniumpropyl-methacrylamidchlorid (MAPTAC) und ein Alkylacrylamide als zweite essentielle Monomerkomponente (v.a. N-Isopropylacrylamid (NIPAM) mit Acryl- / Methacrylsäure und/oder einer anionischen, ethylenisch ungesättigten Carbonsäure, v.a. 2-Acrylamido-2-methylpropansulfonsäure (AMPS), als dritte bzw. vierte Monomerkomponente polymerisiert werden.

Es wurde nun überraschend gefunden, dass nicht-ampholytische, quaternierbare Polymere, anstatt den bereits in der EP 2 100 912 A1 beschriebenen, speziellen ampholytischen Polymeren hervorragend geeignet sind, die Dispergiereigenschaften von festen Teilchen in flüssigen vorzugsweise in wässrigen Medien zu verbessern. Die Umladung der Oberflächenladung durch die erfindungsgemäßen nicht-ampholytischen, quaternierbaren Polymere erfolgt dabei sogar in einem größeren Umfang im Vergleich zu den bereits früher in der EP 2 100 912 A1 beschriebenen, speziellen ampholytischen Polymeren.

Die WO 2009/115506 A2 offenbart mit Polyethyleneimin (wie Lupasol®) stabilisierte metallische Nanopartikel; Silber-Nanoteilchen z. B. sind bekannt für ihre Fähigkeit, wässrige Lösungen von schädlichen Mikroorganismen zu befreien.

In einer ersten Ausführungsform bezieht sich die hier vorliegende Erfindung auf organische Pestizid-Teilchen, dadurch charakterisiert, dass die Teilchen an der Oberfläche mit einem nicht-ampholytischen, quaternierbaren und bei 20 °C wasserlöslichen Polymer ausgewählt aus der Gruppe der Polymere bestehend aus Polyethylenimine, Polypropylenimine sowie Mischungen dieser Polymere beschichtet sind.

In einer weiteren, bevorzugten Ausführungsform bezieht sich die vorliegende Erfindung auf die vorstehend definierten Teilchen wobei die Teilchen einen Durchmesser zwischen 10 und 0,00001 mm aufweisen.

In einer weiteren Ausführungsform bezieht sich die vorliegende Erfindung auf die Verwendung der erfindungsgemäßen Teilchen in organischen Lösungsmitteln, in Pflanzenschutzformulierungen, zur Behandlung von Saatgut, oder zur Behandlung von Pestiziden.

Der Begriff Teilchen gemäß der vorliegenden Erfindung bezieht sich auf teilchenförmiges Material, welches eine nur relativ begrenzte Ausdehnung oder Teilchendurchmesser aufweist. Die Teilchen, die vorzugsweise mit den Polymeren behandelt werden, zeigen vorzugsweise einen Durchmesser zwischen 10 und 0,00001 mm, wobei Teilchen mit Durchmessern von 1 bis 0,0001 mm bzw. 0,1 bis 0,001 mm bevorzugt sind.

Bevorzugt sind weiterhin solche Teilchen, bei denen zur Herstellung eine wässerige Lösung des Polymeren eingesetzt wird, die einen Gewichtsanteil an Polymer von 0,01 bis 30 Gew.-%, vorzugsweise von 0,1 bis 15 und insbesondere von 1 bis 10 Gew.-% aufweist, jeweils bezogen auf das Gesamtgewicht der wässrigen Lösung.

Alternativ können die erfindungsgemäßen Teilchen auch organische Teilchen, vorzugsweise bei Raumtemperatur = 21 °C, feste Teilchen sein, die insbesondere aus der Gruppe der organischen Verbindungen wie zum Beispiel Pestiziden ausgewählt sind.

Bei den Polymeren gemäß der hier vorliegenden Erfindung handelt es sich um nicht-ampholytische, quaternierbare und wasserlösliche Polymere.

Der Begriff der Wasserlöslichkeit von Polymeren bei 20°C bezieht sich auf Polymere, von denen mindestens 0.1 g des jeweiligen Polymers oder der Polymermischung in 100 ml Wasser bei 20°C vollständig löslich ist.

Der Begriff ampholytisch bezieht sich auf Polymere, die sowohl gleichzeitig saure als auch basische hydrophile Gruppen, insbesondere gleichzeitig Carboxyl- und/oder Sulfonsäure-Gruppen als saure Gruppen und Amino- und/oder Amid-Gruppen als basische Gruppen besitzen und sich daher je nach Bedingung sauer oder basisch verhalten können.

Gemäß der obigen Definition des Begriffs ampholytisch bezieht sich die hier vorliegende Erfindung damit auf nicht-ampholytische Polymere, die also nicht gleichzeitig saure und basische Gruppen, insbesondere nicht gleichzeitig Carboxyl- und/oder Sulfonsäure-Gruppen als saure Gruppen und Amino- und/oder Amid-Gruppen als basische Gruppen nebeneinander aufweisen. Der Begriff der Gruppen bezieht sich in diesem Zusammenhang insbesondere auf die Seitengruppen der entsprechenden Polymere.

Der Begriff quaternierbares Polymer bezieht sich auf ein Polymer, welches quaternierbare Amino- oder Amidgruppen, insbesondere quaternierbare Amino- oder Amidgruppen als Seitengruppen aufweist, wobei eine quaternierbare Amino- oder Amidgruppe bzw. Amino- oder Amidseitengruppe dadurch definiert ist, dass letztere in einer Alkylierungsreaktion in eine quartäre Amino- oder Amidgruppe umgewandelt werden kann.

Letzteres bedeutet aber ausdrücklich nicht, dass die quaternierbaren Amino- oder Amidgruppen in den quaternierbaren Polymeren gemäß der vorliegenden Erfindung tatsächlich bereits quaterniert, also insbesondere alkyliert, vorliegen müssen.

Es gilt vielmehr, dass die quaternierbaren Polymere gemäß der vorliegenden Erfindung zwar auch diese quaternierbaren Polymere umfassen, die tatsächlich bereits quaterniert, also insbesondere alkyliert, vorzugsweise methyliert, ethyliert, propyliert oder butyliert, sind, darüber hinaus umfasst die vorliegende Erfindung aber auch zusätzlich die Polymere, die nur prinzipiell aufgrund des Vorhandenseins einer entsprechenden (quaternierbaren) Amino- oder Amidgruppe quaternierbar sind/wären, dies aber (noch) nicht sind. Lediglich die grundsätzliche Möglichkeit zur Alkylierung am Stickstoff der Amino- oder Amidgruppe muss in den erfindungsgemäßen Polymeren gegeben sein.

Geeignete, nicht-ampholytische, quaternierbare Polymere gemäß der hier vorliegenden Erfindung umfassen Polyethylenimine und Polypropylenimine.

Polymere Amine weisen bevorzugt ein gewichtsmittleres Molgewicht (Mw) von 200 bis 3 000 000, bevorzugt von 200 bis 2 000 000 g pro mol auf. Im Allgemeinen beträgt der Gehalt an Aminogruppen, 5 bis 35 mol pro kg, bevorzugt 5 bis 25 mol pro kg, besonders bevorzugt 10-24 mol pro kg. Die Struktur der Polymere kann so gewählt werden, dass es sich um lineare, verzweigte oder hyperverzweigte Polymere, Sternpolymere oder Dendrimere handelt.

Bei den Polyethyleniminen und Polypropyleniminen sind besonders lineare, verzweigte oder hyperverzweigte Polymere bevorzugt. Hierzu zählen insbesondere Homopolymere mit 4, 5, 6, 10, 20, 35 und 100 Wiederholungseinheiten.

Bevorzugte Polyethylenimine sind solche der allgemeinen Formel (I)

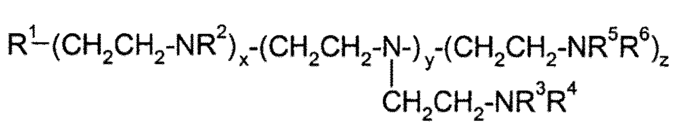

(I)

mit einer mittleren Molmasse (Mw) von 200 bis 2.000.000, in der die Reste $R^1$ bis $R^6$ unabhängig voneinander Wasserstoff, lineare oder verzweigte C1- bis C20-Alkyl-, -Alkoxy-, -Polyoxyethylen-, -Hydroxyalkyl-, -(Alkyl)carboxy-, -Phosphonoalkyl-, -Alkylaminoreste, $C_2$- bis $C_{20}$-Alkenylreste oder $C_6$- bis $C_{20}$-Aryl-, -Aryloxy-, -Hydroxyaryl-, -Arylcarboxy-, oder -Arylaminoreste, die gegebenenfalls weiter substituiert sind, und $R^4$ und $R^5$ darüber hinaus noch weitere Polyethylenimin-Polymerketten bedeuten und x, y und z unabhängig voneinander jeweils 0 oder eine ganze Zahl bezeichnen. $R^1$ kann darüber hinaus auch eine primäre Aminogruppe bedeuten.

Die Summe aus x, y und z ist so zu wählen, dass die mittlere Molmasse im angegebenen Bereich liegt. Bevorzugte Bereiche für die mittlere Molmasse (Mw) der Polyethylenimine der allgemeinen Formel I sind 250 bis 500.000, insbesondere 300 bis 100.000.

Bevorzugte Reste $R^1$ bis $R^6$ sind Wasserstoff, Methyl, Ethyl, Carboxymethyl, Carboxyethyl, Phosphonomethyl, 2-Hydroxyethyl, 2-(2'-Hydroxyethoxy)ethyl und 2-[2'-(2"-Hydroxyethoxy)-ethoxy]ethyl und für $R^1$ eine primäre Aminogruppe.

Handelsübliche Polyethylenimine werden z.B. unter den Handelsnamen Lupasol® von der BASF SE vertrieben. Hierbei sind insbesondere die folgenden kommerziellen Polyethylenimine zu nennen: Lupasol®FG, Lupasol®G20 waterfree, Lupasol®PR 8515, Lupasol®WF, Lupasol®FC, Lupasol®G 20, Lupasol®G35, Lupasol®G100, Lupasol®HF, Lupasol®P, Lupasol®PS, Lupasol®SK, Lupasol®SNA.

Zu linearen und verzweigten Polyethyleniminen siehe auch Römpp, Chemisches Lexikon, Online-Version 2004, Georg Thieme-Verlag und die darin angegebene weiterführende Literatur.

Die Herstellung der erfindungsgemäßen Teilchen aufweisend eine Beschichtung an der Oberfläche mit einem nicht-ampholytischen, quaternierbaren und bei 20°C wasserlöslichen Polymer erfolgt, indem man ein Trägerteilchen in einem wässerigen Medium mit einem erfindungsgemäßen Polymeren in Kontakt bringt. Zu diesem Zweck werden die festen Teilchen in einem wässrigen Medium mit einem Polymer gemäß der obigen Beschreibung in Kontakt gebracht, wobei das Polymer selbst in der wässrigen Lösung vorliegt und man die Polymerlösung mit den festen Teilchen vermischt.

Die Suspension aus den Teilchen und dem nicht-ampholytischen, quaternierbaren und bei 20°C wasserlöslichen Polymer wird anschließend vorzugsweise gerührt, so dass sich das Polymer auf der Oberfläche der Teilchen ablagern kann. Vorzugsweise wird dabei das Polymer nur aufgrund physikalischer Kräfte an die Teilchen angelagert, d.h. es erfolgt bzw. besteht anschließend keine chemische Bindung bzw. Verknüpfung zwischen dem Polymer und dem Teilchen. Bevorzugt erfolgt das Rühren über einen Zeitraum von zumindest mehreren Stunden, beispielsweise von zumindest 2h, 5h, 10 h oder 24h. Besonders bevorzugt für ein möglichst hohes Maß an Oberflächenmodifikation der Teilchen durch das Polymer wird zumindest 2h, oder ganz besonders bevorzugt 5h gerührt.

Nach der Behandlung werden die Teilchen aus der Lösung abgetrennt, beispielsweise durch Filtrieren oder Zentrifugieren, und die abgetrennten Teilchen werden danach ggfs. mit Wasser gewaschen bis die Waschlösung pH-neutral ist und getrocknet. Es ist aber auch denkbar und erfindungsgemäß die Teilchen dispergiert in der wässrigen Polymerlösung zu belassen und so weiter zu verwenden.

Vorzugsweise wird die Polymerlösung bei der Behandlung der festen Teilchen bei einer Temperatur von 10 bis 90°C, vorzugsweise 15 bis 35° C und insbesondere bei 18 bis 30° C durchgeführt.

Die oben beschriebenen, nicht-ampholytischen, quaternierbaren und wasserlöslichen Polymere haben die Eigenschaft, die Oberflächenladung fester Teilchen, gemessen z.B. über deren Zeta-Potential einer wässrigen Dispersion der Teilchen, umzuladen.

Die Messung des Zeta-Potentials stellt eine übliche Methode zur Charakterisierung von fest/flüssig-Dispersionen dar. Dispergierte Teilchen können sich, beispielsweise durch Adsorption von Ionen auf ihrer Oberfläche, elektrisch aufladen. An der Oberfläche dieser elektrisch geladenen Teilchen bildet sich dadurch eine elektrische Doppelschicht, die fest mit den Partikeln verbunden ist und eine scheinbare Volumenzunahme bewirken. Diese feste Schicht wird von einer beweglichen und diffusen Ionenschicht umhüllt. Das Potential $\psi_0$ an der Partikeloberfläche fällt nun innerhalb der festen Ionenschicht mit der Dicke $\delta$ linear auf den Wert $\psi_\delta$ ab, um in der diffusen Schicht annähernd exponentiell bis auf den Wert 0 zurückzugehen. Die Potentialdifferenz zwischen der inneren festen Ionenschicht $\psi_\delta$ und dem Punkt innerhalb der diffusen Ionenschicht, bei der das Potential auf 1/e $\cdot\psi_\delta$ zurückgegangen ist, bezeichnet man als Zeta-Potential.

Das Zeta-Potential kann aus der Wanderungsrichtung und -geschwindigkeit der dispergierten Teilchen im elektrischen Feld direkt ermittelt wobei man folgende Beziehung zugrunde legt:

$$\zeta = \frac{f \cdot \pi \cdot v \cdot \eta}{E \cdot \varepsilon}$$

- $\zeta$ = Zeta-Potential (in mV)
- $\varepsilon$ = Dielektrizitätskonstante des Dispersionsmittels
- v = elektrophoretische Wanderungsgeschwindigkeit (in cm/s)
- $\eta$ = Viskosität des Dispersionsmittels (Poise, 1 Poise = 0,1 Pa • s)
- E = Feldstärke (in mV)
- f = Zahlenfaktor (Reibungsfaktor), der von der Form der Teilchen, ihrer Leitfähigkeit und der Größe der Teilchen im Vergleich zur Dicke der diffusen Doppelschicht abhängt

Die Messung der Wanderungsgeschwindigkeit erfolgt dabei, je nach Größe der zu untersuchenden Teilchen

entweder mittels lichtmikroskopischer Beobachtung oder, insbesondere bei kleineren Teilchen, mittels Laser-Korrelations-Spektroskopie.

Die erfindungsgemäß verwendeten Polymere führen dazu, dass die jeweils behandelten Teilchen an die Oberfläche eine Umladung erfahren, beispielsweise von einer positiven hin zu einem negativen Ladungswert, oder weniger bevorzugt, umgekehrt. Bevorzugt sind Veränderungen von einem negativen hin zu einem positiven Zeta-Potential der Teilchen.

Die vorliegende Erfindung erlaubt auf der Basis dieser Effekte die Herstellung von sehr stabilen Dispersionen in flüssigen Medien auf der Basis der beschichteten Teilchen, die organischer Natur sind.

Beispielsweise sind die so an der Oberfläche umgeladenen festen, erfindungsgemäßen Teilchen, und die wässrigen Dispersionen solcher Teilchen in in organischen Lösungsmitteln, in Pflanzenschutzformulierungen und/oder zur Behandlung von Saatgut und/oder Pestiziden zu verwenden.

Die Teilchen und die Herstellungsverfahren gemäß der vorliegenden Erfindung bieten außerdem bei der Verwendung im Bereich von Pflanzenschutzformulierungen ebenfalls verschiedene Vorteile:

Pflanzenschutzformulierungen basieren oftmals auf teilchenförmigen Wirkstoffen, die nur sehr begrenzt bzw. überhaupt nicht in Wasser löslich sind und daher nicht ohne weiteres als wässrige Lösungen gelagert und ausgebracht, vorzugsweise versprüht, werden können. Zumeist werden daher Pflanzenschutzformulierungen als Dispersionen oder Suspensionen formuliert und insbesondere auch gelagert und ausgebracht. Auf der anderen Seite ist in vielen Pflanzenschutzformulierungen selbst die Stabilität der entsprechenden Dispersionen bzw. Suspensionen während der Lagerung und der Ausbringung schwierig. Üblicherweise wird deshalb eine Reihe von Zusätzen erforderlich, die den Dispersionen bzw. Suspensionen zusätzliche Stabilität während der Lagerung und Ausbringung verleihen sollen. Deren biologische Verwendung wirft allerdings zusätzliche Probleme auf und sollte vorzugsweise vermieden werden. Gerade im Bereich der Pflanzenschutzformulierungen sind daher alternative oder verbesserte Technologien erwünscht, mit denen sich Dispersionen bzw. Suspensionen, insbesondere die Konzentrate davon, ohne die derzeit üblichen Hilfsmittel bzw. zumindest unter Verwendung üblicher Hilfsmittel in verminderter Konzentration stabilisieren lassen.

Die erfindungsgemäßen Teilchen und deren Herstellung bieten auch im Bereich des Pflanzenschutzes höhere Stabilität der entsprechenden Dispersionen bzw. Suspensionen insbesondere hinsichtlich der Lagerung der entsprechenden Pflanzenschutzformulierungen und deren spätere Ausbringung auf landwirtschaftliche Nutzflächen, Pflanzen oder dem entsprechenden Saatgut. Die vorliegenden Erfindung erlaubt unter anderem eine bessere Lagerung und Ausbringung von Pflanzenschutzformulierungen, insbesondere kann auf bisher übliche Zusätze wie Dispergatoren, die zur Verbesserung der Stabilität von Dispersionen bzw. Suspensionen beigefügt werden, verzichtet werden oder letztere müssen zumindest nur in geringeren Mengen eingesetzt werden.

Die vorliegende Erfindung eignet sich daher insbesondere auch bei Pflanzenschutzformulierungen, bei denen Teilchen als Konzentrate in Form von Dispersionen oder Suspensionen, bzw. die späteren verdünnten Anwendungslösungen, "tank mixes", davon, gelagert und anschließend ausgebracht, insbesondere versprüht, werden.

Ein weiterer Vorteil der erfindungsgemäßen Teilchen und Herstellverfahren im Bereich des Pflanzenschutzes besteht in der verbesserten Haftung der Teilchen an der zu behandelnden Pflanze, dem Saatgut oder landwirtschaftlichen Nutzfläche wie z.B. Ackerfläche, Boden, etc.

Die verbesserte Haftung ergibt sich aus der Umpolung der Oberflächenladung der erfindungsgemäßen Teilchen, die bereits oben beschrieben wurde. Aus dieser verbesserten Haftung ergibt sich beispielsweise eine verbesserte Regenbeständigkeit von Pflanzenschutzformulierungen, wenn letztere die Teilchen gemäß der vorliegenden Erfindung enthalten bzw. die Teilchen gemäß des erfindungsgemäßen Verfahrens erhalten wurden und anschließend in Pflanzschutzformulierungen verwendet werden.

Für die Verwendung der erfindungsgemäßen Teilchen in Pflanzenschutzformulierungen bietet sich insbesondere an, Teilchen aus organischen Materialien zu verwenden und deren Oberfläche mit einem nicht-ampholytischen, quaternierbaren und bei 20°C wasserlöslichen Polymer zu beschichten. Als organische Materialien für die erfindungsgemäßen Teilchen kommen insbesondere Pestizide (Schädlingsbekämpfungsmittel) in Frage.

Ein Pestizid (Schädlingsbekämpfungsmittel) ist im Allgemeinen ein chemisches oder biologisches (Biopestizid) Agens (wie ein Virus, Bakterium, eine antimikrobielle Substanz oder ein Desinfektionsmittel), welches durch sein Wirkung Schädlinge abschreckt, betäubt, tötet oder auf andere Weise entgegenwirkt. Der Begriff Schädlinge schließt unter anderem Insekten, Pflanzenpathogene, Unkraut, Weichtiere, Vögel, Säugetiere, Fische, Nematoden (Fadenwürmer) und Mikroben ein, soweit diese Schäden anrichten, die landwirtschaftliche Produktion und Kultivierung beeinträchtigen, Krankheiten verbreiten oder Vektoren oder Übeträger für Krankheiten darstellen.

Der Begriff "Pestizid" umfasst auch Pflanzenwachstumsregulatoren, die das erwartete Wachstum, das Blühen oder die Reproduktionsrate von Pflanzen verändern; Entlaubungsmittel, die das Abfallen von Blättern oder Laub von der Pflanze hervorrufen, üblicherweise um die Ernte zu erleichtern; Trocknungsmittel, die das Trocknen von lebenden Geweben insbesondere unerwünschten Pflanzenspitzen fördern; Pflanzenaktivatoren, die die Pflanzenphysiologie hinsichtlich der Abwehr bestimmter Schädlinge aktivieren; Safener, die die unerwünschte Herbizidwirkung von Pestiziden auf Kulturpflanzen reduzieren; und Pflanzenwachstumsförderer, die die Pflanzenphysiologie beeinflussen, insbesondere

zur Erhöhung des Pflanzenwachstums, der Biomasse, der Ausbeute oder andere Qualitätsparameter der erntefähigen Produkte einer Kulturpflanze.

Biopestizide sind definiert als eine Form von Pestiziden auf der Basis von Mikroorganismen (Bakterien, Pilze, Viren, Nematoden, etc.) oder natürlichen Produkten (Verbindungen wie Metabolite, Proteine, oder Extrakte aus biologischen oder anderen natürlichen Quellen) (US Environmental definiert Protection Agency http://www.epa.gov/pesticides/biopesticides/).

Biopestizide fallen in zwei Hauptklassen, Microbielle Pestizide und biochemische Pestizide:

(1) Mikrobielle Pestizide bestehen aus Bakterien, Pilzen oder Viren (und schließen oftmals die Stoffwechselprodukte, die von Bakterien und Pilzen erzeugt werden, ein). Nematoden sind auch als mikrobielle Pestizide klassifiziert, obwohl sie multizellulär sind.

(2) Biochemische Pestizide sind natürlich vorkommende Substanzen oder sind strukturell ähnlich und funktionell identisch zu einer natürlich vorkommenden Substanz und/oder stellen Extrakte aus biologischen Quellen dar, die Schädlingen bekämpfen oder eine andere Form von Pflanzenschutz als unten definiert bieten; sie haben aber nicht-toxische Wirkmechanismen (wie beispielsweise die Regulation von Wachstum oder Entwicklung; die Wirkung als Lockstoffe, Repellants oder Abwehraktivatoren (z.B. induzierte Resistenz) und sind relativ wenig toxisch für Säugetiere.

Biopestizide für den Einsatz gegen Pflanzenkrankheiten haben sich bereits bei einer Vielzahl von Nutzpflanzen bewährt. Zum Beispiel spielen Biopestizide bereits eine wichtige Rolle bei der Kontrolle des falschen Mehltaus. Ihre Vorteile sind: keine Sperrfrist bis zum Zeitpunkt der Ernte, die Möglichkeit des Einsatzes unter moderatem bis schwerem Krankheitsdruck, und die Möglichkeit des Einsatzes im Gemisch oder in einer wechselnden Verwendung mit anderen registrierten Pestiziden.

Ein wichtiger Wachstumsbereich für Biopestizide ist im Bereich der Saatgutbehandlung und der Bodenverbesserer. Saatgutbehandlungen mit Biopestiziden werden beispielsweise zur Bekämpfung von aus dem Boden stammenden Pilzen, die Krankheitserreger darstellen und Saatgutfäulnis, Keimlingsbrand, Wurzelfäule und Keimlingkrankheiten verursachen, verwendet. Sie können auch zur Bekämpfung von samenbürtigen Pilzerregern als auch Pilzerregern, die sich auf der Oberfläche des Saatguts befinden, verwendet werden. Viele Produkte auf der Basis von Biopestiziden eignen sich auch zur Stimulation der Abwehr der Wirtspflanze und anderer physiologischer Prozesse, die Nutzpflanzen widerstandsfähiger gegen eine Vielzahl von biotischen und abiotischen Stressfaktoren machen oder die das Pflanzenwachstum regulieren können. Viele Produkte auf der Basis von Biopestiziden weisen auch die Fähigkeit auf, die Pflanzengesundheit, das Pflanzenwachstum und / oder den Ertrag zu steigern.

Der Begriff "Pflanzengesundheit" ist zu verstehen als ein Zustand der Pflanze oder ihrer Produkte, welcher sich durch jeweils einzelne Indikatoren oder deren Kombination miteinander bestimmt, wie z.B. der Ertrag (z.B. erhöhte Biomasse und/oder erhöhter Gehalt wertvoller Inhaltsstoffe), die Vitalität der Pflanze (z.B. verbessertes Pflanzenwachstum und/oder grünere Blätter ("greening effect")), die Qualität (z.B. höherer Gehalt oder bessere Zusammensetzung bestimmter Inhaltsstoffe) und die Toleranz hinsichtlich abiotischem und/oder biotischem Stress. Die oben genannten Indikatoren für den Gesundheitszustand einer Pflanze können miteinander zusammenhängen oder einander bedingen.

Pestizide, die im Rahmen der vorliegenden Erfindung als organische Teilchen in Frage kommen umfassen Verbindungen und deren Kombinationen aus den folgenden Klassen:

A) Atmungskettenhemmer

- Inhibitoren von Komplex III an der $Q_o$ Position (e. g. Strobilurine): Azoxystrobin, Coumethoxystrobin, Coumoxystrobin, Dimoxystrobin, Enestroburin, Fenaminstrobin, Fenoxystrobin/Flufenoxystrobin, Fluoxastrobin, Kresoxim-methyl, Mandestrobine, Metominostrobin, Orysastrobin, Picoxystrobin, Pyraclostrobin, Pyrametostrobin, Pyraoxystrobin, Trifloxystrobin, 2-(2-(3-(2,6-Dichlorphenyl)-1-methyl-allylidenaminooxymethyl)-phenyl)-2-methoxyimino-N-methyl-acetamid, Pyribencarb, Triclopyricarb/Chlorodincarb, Famoxadon, Fenamidon, Methyl-*N*-[2-[(1,4-dimethyl-5-phenyl-pyrazol-3-yl)oxylmethyl]phenyl]-N-methoxy-carbamat, 1-[3-Chloro-2-[[1-(4-chlorophenyl)-1H-pyrazol-3-yl]oxymethyl]phenyl]-4-methyl-tetrazol-5-on, 1-[3-Bromo-2-[[1-(4-chlorophenyl)pyrazol-3-yl]oxymethyl]phenyl]-4-methyl-tetrazol-5-on, 1-[2-[[1-(4-Chlorophenyl)pyrazol-3-yl]oxymethyl]-3-methylphenyl]-4-methyl-tetrazol-5-on, 1-[2-[[1-(4-Chlorophenyl)pyrazol-3-yl]oxymethyl]-3-fluorophenyl]-4-methyl-tetrazol-5-on, 1-[2-[[1-(2,4-Dichlorophenyl)pyrazol-3-yl]oxymethyl]-3-fluoro-phenyl]-4-methyl-tetrazol-5-on, 1-[2-[[4-(4-Chlorophenyl)thiazol-2-yl]oxymethyl]-3-methyl-phenyl]-4-methyl-tetrazol-5-on, 1-[3-Chloro-2-[[4-(p-tolyl)thiazol-2-yl]oxymethyl]phenyl]-4-methyl-tetrazol-5-on, 1-[3-Cyclopropyl-2-[[2-methyl-4-(1-methylpyrazol-3-yl)phenoxy]methyl]phenyl]-4-methyl-tetrazol-5-on, 1-[3-(Difluoromethoxy)-2-[[2-methyl-4-(1-methylpyrazol-3-yl)phenoxy]methyl]phenyl]-4-methyl-tetrazol-5-on, 1-Methyl-4-[3-methyl-2-[[2-methyl-4-(1-methylpyrazol-3-yl)phenoxy]methyl]phenyl]tetrazol-5-on, 1-Methyl-4-[3-methyl-2-[[1-[3-(trifluoromethyl)phenyl]-ethylideneamino]oxymethyl]phenyl]tetrazol-5-on, (*Z*,2,*E*)-5-[1-(2,4-Dichlorophenyl)pyrazol-3-yl]-oxy-2-methoxyimino-N,3-dimethylpent-3-enamid, (*Z*,2*E*)-5-[1-(4-Chlorophenyl)pyrazol-3-yl]oxy-2-methoxyimino-*N*,3-dimethyl-pent-3-enamid, (*Z*,2,*E*)-5-[1-(4-Chloro-2-fluoro-phenyl)pyrazol-3-yl]oxy-2-methoxyimino-*N*,3-dimethyl-pent-3-enamid;

- Inhibitoren von Komplex III an der $Q_i$ Position: Cyazofamid, Aamisulbrom, [(3S,6S,7R,8R)-8-Benzyl-3-[(3-acetoxy-4-methoxy-pyridine-2-carbonyl)amino]-6-methyl-4,9-dioxo-1,5-dioxonan-7-yl]2-methylpropanoate, [(3S,6S,7R,8R)-8-Benzyl-3-[[3-(acetoxymethoxy)-4-methoxy-pyridine-2-carbonyl]amino]-6-methyl-4,9-dioxo-1,5-dioxonan-7-yl] 2-methylpropanoate, [(3S,6S,7R,8R)-8-Benzyl-3-[(3-isobutoxycarbonyloxy-4-methoxy-pyridine-2-carbonyl)amino]-6-methyl-4,9-dioxo-1,5-dioxonan-7-yl]2-methylpropanoate, [(3S,6S,7R,8R)-8-Benzyl-3-[[3-(1,3-benzodioxol-5-ylmethoxy)-4-methoxy-pyridine-2-carbonyl]amino]-6-methyl-4,9-dioxo-1,5-dioxonan-7-yl]2-methylpropanoate; (3S,6S,7R,8R)-3-[[(3-Hydroxy-4-methoxy-2-pyridinyl)carbonyl]amino]-6-methyl-4,9-dioxo-8-(phenylmethyl)-1,5-dioxonan-7-yl 2-methylpropanoate, (3S,6S,7R,8R)-8-Benzyl-3-[3-[(isobutyryloxy)methoxy]-4-methoxypicolinamido]-6-methyl-4,9-dioxo-1,5-dioxonan-7-yl isobutyrate;
- Inhibitoren des Komplex II (z.B. Carboxamide): Benodanil, Benzovindiflupyr, Bixafen, Boscalid, Carboxin, Fenfuram, Fluopyram, Flutolanil, Fluxapyroxad, Furametpyr, Isofetamid, Isopyrazam, Mepronil, Oxycarboxin, Penflufen, Penthiopyrad, Sedaxane, Tecloftalam, Thifluzamide, N-(4'-Trifluoromethylthiobiphenyl-2-yl)-3-Difluoromethyl-1-methyl-1H-pyrazole-4-carboxamid, N-(2-(1,3,3-Trimethyl-butyl)-phenyl)-1,3-dimethyl-5-fluoro-1H-pyrazole-4-carboxamid, N-(2-(1,3,3-Trimethyl-butyl)-phenyl)-1,3-dimethyl-5-fluoro-1H-pyrazole-4-carboxamid, 3-(Difluoromethyl)-1-methyl-N-(1,1,3-trimethylindan-4-yl)pyrazole-4-carboxamid, 3-(Trifluoromethyl)-1-methyl-N-(1,1,3-trimethylindan-4-yl)pyrazole-4-carboxamid, 1,3-Dimethyl-N-(1,1,3-trimethylindan-4-yl)pyrazole-4-carboxamid, 3-(Trifluoromethyl)-1,5-dimethyl-N-(1,1,3-trimethylindan-4-yl)pyrazole-4-carboxamid, 1,3,5-Trimethyl-N-(1,1,3-trimethylindan-4-yl)pyrazole-4-carboxamid, N-(7-Fluoro-1,1,3-trimethyl-indan-4-yl)-1,3-dimethyl-pyrazole-4-carboxamid, N-[2-(2,4-Dichlorophenyl)-2-methoxy-1-methyl-ethyl]-3-(difluoromethyl)-1-methyl-pyrazole-4-carboxamid;
- Weitere Atmungsketteninhibitoren (z.B. Komplex I, Entkoppler): Diflumetorim, (5,8-Difluoroquinazolin-4-yl)-{2-[2-fluoro-4-(4-trifluoromethylpyridin-2-yloxy)-phenyl]-ethyl}-amin; Nitrophenyl-Derivate: Binapacryl, Dinobuton, Dinocap, Fluazinam; Ferimzone; Organometalverbindungen: Fentin-Salze, wie beispielsweise Fentinacetate, Fentinchlorid oder Fentinhydroxid; Ametoctradin; und Silthiofam;

B) Inhibitoren der Sterolbiosynthese (SBI Fungizide)

- C14 Demethylaseinhibitoren (DMI Fungizide): Triazole: Azaconazol, Bitertanol, Bromuconazol, Cyproconazol, Difenoconazol, Diniconazol, Diniconazol-M, Epoxiconazol, Fenbuconazol, Fluquinconazol, Flusilazol, Flutriafol, Hexaconazol, Imibenconazol, Ipconazol, Metconazol, Myclobutanil, Oxpoconazol, Paclobutrazol, Penconazol, Propiconazol, Prothioconazol, Simeconazol, Tebuconazol, Tetraconazol, Triadimefon, Triadimenol, Triticonazol, Uniconazol, 1-[*rel*-(2*S*;3*R*)-3-(2-Chlorophenyl)-2-(2,4-difluorophenyl)-oxiranylmethyl]-5-thiocyanato-1H-[1,2,4]triazol, 2-[*rel*-(2*S*;3*R*)-3-(2-Chlorophenyl)-2-(2,4-difluorophenyl)-oxiranylmethyl]-2H-[1,2,4]triazole-3-thiol, 2-[2-Chloro-4-(4-chlorophenoxy)phenyl]-1-(1,2,4-triazol-1-yl)pentan-2-ol, 1-[4-(4-Chlorophenoxy)-2-(trifluoromethyl)phenyl]-1-cyclopropyl-2-(1,2,4-triazol-1-yl)ethanol, 2-[4-(4-Chlorophenoxy)-2-(trifluoromethyl)phenyl]-1-(1,2,4-triazol-1-yl)butan-2-ol, 2-[2-Chloro-4-(4-chlorophenoxy)phenyl]-1-(1,2,4-triazol-1-yl)butan-2-ol, 2-[4-(4-Chlorophenoxy)-2-(trifluoromethyl)phenyl]-3-methyl-1-(1,2,4-triazol-1-yl)butan-2-ol, 2-[4-(4-Chlorophenoxy)-2-(trifluoromethyl)phenyl]-1-(1,2,4-triazol-1-yl)propan-2-ol, 2-[2-Chloro-4-(4-chlorophenoxy)phenyl]-3-methyl-1-(1,2,4-triazol-1-yl)butan-2-ol, 2-[4-(4-Chlorophenoxy)-2-(trifluoromethyl)phenyl]-1-(1,2,4-triazol-1-yl)pentan-2-ol, 2-[4-(4-Fluorophenoxy)-2-(trifluoromethyl)phenyl]-1-(1,2,4-triazol-1-yl)propan-2-ol, 2-[2-Chloro-4-(4-chlorophenoxy)phenyl]-1-(1,2,4-triazol-1-yl)pent-3-yn-2-ol; Imidazole: Imazalil, Pefurazoat, Prochloraz, Triflumizol; Pyrimidine, Pyridines und Piperazine: Fenarimol, Nuarimol, Pyrifenox, Triforin, [3-(4-Chloro-2-fluoro-phenyl)-5-(2,4-difluorophenyl)isoxazol-4-yl]-(3-pyridyl)methanol;
- Delta14-Reductase linhibitoren: Aldimorph, Dodemorph, Dodemorphacetat, Fenpropimorph, Tridemorph, Fenpropidin, Piperalin, Spiroxamin;
- Inhibitoren der 3-Ketoreduktase: Fenhexamid;

C) Nukleinsäuresyntheseinhibitoren

- Phenylamide oder Acylaminosäure-Fungizide: Benalaxyl, Benalaxyl-M, Kiralaxyl, Metalaxyl, Metalaxyl-M (Mefenoxam), Ofurace, Oxadixyl;
- Weitere: Hymexazol, Octhilinon, Oxolinicsäure, Bupirimat, 5-Fluorozytosin, 5-Fluoro-2-(p-tolylmethoxy)pyrimidin-4-amin, 5-Fluoro-2-(4-fluorophenylmethoxy)pyrimidin-4-amin;

D) Inhibitoren der Zellteilung und des Zytoskeletts

- Tubulininhibitoren, wie beispielsweise Benzimidazole, Thiophanate: Benomyl, Carbendazim, Fuberidazol, Thiabendazol, Thiophanat-Methyl; Triazolopyrimidine: 5-Chloro-7-(4-methylpiperidin-1-yl)-6-(2,4,6-trifluorophenyl)-[1,2,4]triazolo[1,5-a]pyrimidin
- Weitere Inhibitoren der Zellteilung: Diethofencarb, Ethaboxam, Pencycuron, Fluopicolid, Zoxamid, Metrafenon, Pyriofenon;

E) Inhibitoren der Aminosäure- und Proteinsynthese

- Methioninsynthese-Inhibitoren (Anilino-Pyrimidine): Cyprodinil, Mepanipyrim, Pyrimethanil;
- Proteinsyntheseinhibitoren: Blasticidin-S, Kasugamycin, Kasugamycinhydrochlorid-Hydrate, Mildiomycin, Streptomycin, Oxytetracyclin, Polyoxin, Validamycin A;

F) Signalübertragungs-Inhibitoren

- MAP / Histidinkinase-Inhibitoren: Fluoroimid, Iprodion, Procymidon, Vinclozolin, Fenpiclonil, Fludioxonil;
- G-Protein Inhibitoren: Quinoxyfen;

G) Lipid- und Membransynthese-Inhibitoren

- Phospholipid-Biosynthese-Inhibitoren: Edifenphos, Iprobenfos, Pyrazophos, Isoprothiolan;
- Lipid peroxidation: Dicloran, Quintozen, Tecnazen, Tolclofos-Methyl, Biphenyl, Chloroneb, Etridiazol;
- Phospholipid-Biosynthese und Zellwandaufbau: Dimethomorph, Flumorph, Mandipropamid, Pyrimorph, Benthiavalicarb, Iprovalicarb, Valifenalat und N-(1-(1-(4-Cyano-phenyl)-ethanesulfonyl)-but-2-yl)carbaminsäure-(4-fluorophenyl)ester;
- Verbindungen, die die Durchlässigkeit der Zellmembran und Fettsäuren beeinflussen: Propamocarb, Propamocarbhydrochlorid
- Fettsäureamidhydrolase-Inhibitoren: Oxathiapiprolin, 2-{3-[2-(1-{[3,5-Bis(difluoromethyl-1H-pyrazol-1-yl]acetyl}piperidin-4-yl)-1,3-Thiazol-4-yl]-4,5-dihydro-1,2-oxazol-5-yl}phenyl methanesulfonat, 2-{3-[2-(1-{[3,5-Bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonat;

H) Inhibitoren mit Wirkung auf mehrere Stellen

- Anorganische, aktive Substanzen: Bordeaux Mischung, Kupferacetat, Kupferhydroxid, Kupferoxychlorid, Basisches Kupfersulfat, Schwefel;
- Thio- und Dithiocarbamate: Ferbam, Mancozeb, Maneb, Metam, Metiram, Propineb, Thiram, Zineb, Ziram;
- Organochlor-Verbindungen (z. B. Phthalimide, Sulfamide, Chloronitrile): Anilazin, Chlorothalonil, Captafol, Captan, Folpet, Dichlofluanid, Dichlorophen, Hexachlorobenzol, Pentachlorphenole und ihre Salze, Phthalide, Tolylfluanid, N-(4-Chloro-2-nitro-phenyl)-N-ethyl-4-methyl-benzenesulfonamid;
- Guanidine und andere: Guanidin, Dodin, Dodine freie Base, Guazatin, Guazatinacetat, Iminoctadin, Iminoctadinetriacetat, Iminoctadine-tris(albesilat), Dithianon, 2,6-Dimethyl-1H,5H-[1,4]dithiino[2,3-c:5,6-c']dipyrrole-1,3,5,7(2H,6H)-tetraon;

I) Zellwandsynthese-Inhibitoren

- Inhibitoren der Glucansynthese: Validamycin, Polyoxin B; Melaninsynthese-Inhibitoren: Pyroquilon, Tricyclazol, Carpropamid, Dicyclomet, Fenoxanil;

J) Pflanzenabwehr-Induktoren

- Acibenzolar-S-methyl, Probenazol, Isotianil, Tiadinil, Prohexadione-Calcium; Phosphonate: Fosetyl, Fosetyl-Aluminum, Phosphonsäure und deren Salze;

K) Unbekannte Wirkmechanismen

- Bronopol, Chinomethionat, Cyflufenamid, Cymoxanil, Dazomet, Debacarb, Diclomezin, Difenzoquat, Difenzoquat-methylsulfat, Diphenylamin, Fenpyrazamin, Flumetover, Flusulfamid, Flutianil, Methasulfocarb, Nitrapyrin, Nitrothal-isopropyl, Oxathiapiprolin, Picarbutrazox, Tolprocarb, 2-[3,5-Bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanon, 2-[3,5-Bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanon, 2-[3,5-Bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanon, Oxin-copper, Proquinazid, Tebufloquin, Tecloftalam, Triazoxid, 2-Butoxy-6-iodo-3-propylchromen-4-on, N-(Cyclopropylmethoxyimino-(6-difluoro-methoxy-2,3-difluoro-phenyl)-methyl)-2-phenyl acetamid, N'-(4-(4-Chloro-3-trifluoromethyl-phenoxy)-2,5-dimethyl-phenyl)-N-ethyl-N-methyl formamidin, N'-(4-(4-Fluoro-3-trifluoromethyl-phenoxy)-2,5-dimethyl-phenyl)-N-ethyl-N-methyl formamidin, N'-(2-Methyl-5-trifluoromethyl-4-(3-trimethylsilanyl-propoxy)-phenyl)-N-ethyl-N-methyl formamidin, N'-(5-Difluoromethyl-2-methyl-4-(3-trimethylsilanyl-propoxy)-phenyl)-N-ethyl-N-methyl formamidin, Methoxy-essigsäure 6-tert-butyl-8-fluoro-2,3-dimethyl-quinolin-4-yl ester, 3-[5-(4-Methylphenyl)-2,3-dimethyl-isoxazolidin-3-yl]-pyridin, 3-[5-(4-Chloro-phenyl)-2,3-dimethyl-isoxazolidin-3-yl]-pyridin (Pyrisoxazol), N-(6-Methoxy-pyridin-3-yl) cyclopropancarboxylsäureamid, 5-Chloro-1-(4,6-dimethoxy-pyrimidin-2-yl)-2-methyl-1H-benzoimidazol, 2-(4-Chloro-phenyl)-N-[4-(3,4-dimethoxy-phenyl)-isoxazol-5-yl]-2-prop-2-ynyloxy-acetamid, Ethyl (Z)-3-amino-2-cyano-3-phenyl-prop-2-enoat, Pentyl N-[6-[[(Z)-[(1-methyltetrazol-5-yl)-phenyl-methylene]amino]oxymethyl]-2-pyridyl]carbamat, 2-[2-[(7,8-Difluoro-2-methyl-3-quinolyl)oxy]-6-fluoro-phenyl]propan-2-ol, 2-[2-Fluoro-6-[(8-fluoro-2-methyl-3-quinolyl)oxy]phenyl]propan-2-ol, 3-(5-Fluoro-3,3,4,4-tetramethyl-3,4-dihydroisoquinolin-1-yl)quinoline, 3-(4,4-Difluoro-3,3-dimethyl-3,4-dihydroisoquinolin-1-yl)quinolin, 3-(4,4,5-Trifluoro-3,3-dimethyl-3,4-dihydroisoquinolin-1-yl)quinolone, 9-Fluoro-2,2-dimethyl-5-(3-quinolyl)-3H-1,4-benzoxazepin;

L) Biopestizide

L1) Mikrobielle Pestizide mit fungizider, bakterizider, viruzider und/oder Pflanzenabwehraktivierender Wirkung: *Ampelomyces quisqualis, Aspergillus flavus, Aureobasidium pullulans, Bacillus altitudinis, B. amyloliquefaciens, B. megaterium, B. mojavensis, B. mycoides, B. pumilus, B. simplex, B. solisalsi, B. subtilis, B. subtilis* var. *amyloliquefaciens, Candida oleophila, C. saitoana, Clavibacter michiganensis* (Bacteriophagen), *Coniothyrium minitans, Cryphonectria parasitica, Cryptococcus albidus, Dilophosphora alopecuri, Fusarium oxysporum, Clonostachys rosea* f. *catenulate* (auch als *Gliocladium catenulatum* bezeichnet), *Gliocladium roseum, Lysobacter antibioticus, L. enzymogenes, Metschnikowia fructicola, Microdochium dimerum, Microsphaeropsis ochracea, Muscodor albus, Paenibacillus alvei, Paenibacillus polymyxa, P. agglomerans, Pantoea vagans, Penicillium bilaiae, Phlebiopsis gigantea, Pseudomonas* sp., *Pseudomonas chloraphis, P. fluorescens, P. putida, Pseudozyma flocculosa, Pichia anomala, Pythium oligandrum, Sphaerodes mycoparasitica, Streptomyces griseoviridis, S. lydicus, S. violaceusniger, Talaromyces flavus, Trichoderma asperellum, T. atroviride, T. fertile, T. gamsii, T. harmatum, T. harzianum, T. polysporum, T. stromaticum, T. virens, T. viride, Typhula phacorrhiza, Ulocladium oudemansii, Verticillium dahlia,* Zucchinigelbmosaik-Virus (avirulenter Stamm);
L2) Biochemische Pestizide mit fungizider, bakterizider, viruzider und/oder Pflanzenabwehraktivierender Wirkung: Chitosan (Hydrolysate), Harpinprotein, Laminarin, Menhaden Fischöl, Natamycin, Scharkavirus Hüllprotein, Kalium oder Natriumbikarbonat, *Reynoutria sachalinensis* Extrakt, Salizylsäure, Teebaumöl;
L3) Microbielle Pestizide mit insektizider, akarizider, molluskizider und/oder nematizider Wirkung: *Agrobacterium radiobacter, Bacillus cereus, B. firmus, B. thuringiensis, B. thuringiensis* ssp. *aizawai, B. t.* ssp. *israelensis, B. t.* ssp. *galleriae, B. t.* ssp. *kurstaki, B. t.* ssp. *tenebrionis, Beauveria bassiana, B. brongniartii, Burkholderia* spp., *Chromobacterium subtsugae, Cydia pomonella* granulovirus (CpGV), *Cryptophlebia leucotreta* granulovirus (CrleGV), *Flavobacterium* spp., *Helicoverpa armigera* nucleopolyhedrovirus (HearNPV), *Heterorhabditis bacteriophora, Isaria fumosorosea, Lecanicillium longisporum, L. muscarium, Metarhizium anisopliae, Metarhizium anisopliae* var. *anisopliae, M. anisopliae* var. *acridum, Nomuraea rileyi, Paecilomyces lilacinus, Paenibacillus popilliae, Pasteuria* spp., *P. nishizawae, P. penetrans, P. ramosa, P. thornea, P. usgae, Pseudomonas fluorescens, Spodoptera littoralis* nucleopolyhedrovirus (SpliNPV), *Steinernema carpocapsae, S. feltiae, S. kraussei, Streptomyces galbus, S. microflavus*;
L4) Biochemische Pestizide mit insektizider, acarizider, molluskizider, Pheromonartiger und/oder nematizider Wirkung: L-Carvon, Citral, (E,Z)-7,9-Dodecadien-1-ylacetat, Ethylformat, (E,Z)-2,4-Ethyldecadienoat (Birnenester), (Z,Z,E)-7,11,13-Hexade-catrienal, Heptylbutyrat, Isopropylmyristat, Lavanulylsenecioat, cis-Jasmon, 2-Methyl-1-butanol, Methyleugenol, Methyl-Jasmonat, (E,Z)-2,13-Octadecadien-1-ol, (E,Z)-2,13-Octadecadien-1-ol azetat, (E,Z)-3,13-Octadecadien-1-ol, R-1-Octen-3-ol, Pentatermanon, Kaliumsilikat, Sorbitoloktanoat, (E,Z,Z)-3,8,11-Tetradecatrienylazetat, (Z,E)-9,12-Tetradecadien-1-ylazetat, Z-7-Tetradecen-2-on, Z-9-Tetradecen-1-ylazetat, Z-11-Tetradecenal, Z-11-Tetradecen-1-ol, Acacia negra Extrakt, Extrakt aus Grapefruit-Samen und -Fruchtfleisch, Extract aus *Chenopodium ambrosiodes,* Katzenminzeöl, Neemöl, Seifenbaum-Extrakt, Tagetesöl;
L5) Mikrobielle Pestizide mit pflanzenstressreduzierender, pflanzenwachstumsfördernder und/oder ertragssteigernder Wirkung: *Azospirillum amazonense, A. brasilense, A. lipoferum, A. irakense, A. halopraeferens, Bradyrhizobium* spp., *B. elkanii, B. japonicum, B. liaoningense, B. lupini, Delftia acidovorans, Glomus intraradices, Mesorhizobium* spp., *Rhizobium leguminosarum* bv. *phaseoli, R. l.* bv. *trifolii, R. l.* bv. *viciae, R. tropici, Sinorhizobium meliloti*;

L6) Biochemische Pestizide mit pflanzenstressreduzierender, pflanzenwachstums-regulierender und/oder pflanzenertragserhöhender Wirkung: Abscisinsäure, Aluminiumsilikate (Kaolin), 3-Decen-2-on, Formononetin, Genistein, Hesperetin, Homobrassinolid, Humate, Jasmonsäure und ihre davon abgeleiteten Salze und Derivate, Lysophosphatidylethanolamin, Naringenin, Polymere Polyhydroxysäure, *Ascophyllum nodosum* (Norwegian kelp, Brown kelp, Knotentang) Extract und *Ecklonia maxima* (kelp) Extract;

M) Wachstumsregulatoren Abscisinsäure, Amidochlor, Ancymidol, 6-Benzylaminopurin, Brassinolid, Butralin, Chlormequat (Chlormequatchlorid), Cholinechlorid, Cyclanilid, Daminozid, Dikegulac, Dimethipin, 2,6-Dimethylpuridin, Ethephon, Flumetralin, Flurprimidol, Fluthiacet, Forchlorfenuron, Gibberellinsäure, Inabenfid, Indol-3-essigsäure, Maleinsäurehydrazid, Mefluidid, Mepiquat (Mepiquatchlorid), Naphthalinessigsäure, N-6-Benzyladenine, Paclobutrazol, Prohexadion (Prohexadion-Calcium), Prohydrojasmon, Thidiazuron, Triapenthenol, Tributylphosphorotrithioat, 2,3,5-Tri-iodobenzoesäure, Trinexapac-Ethyl and Uniconazol;

N) Herbizide

- Acetamide: Acetochlor, Alachlor, Butachlor, Dimethachlor, Dimethenamid, Flufenacet, Mefenacet, Metolachlor, Metazachlor, Napropamid, Naproanilid, Pethoxamid, Pretilachlor, Propachlor, Thenylchlor;
- Aminosäure-Derivate: Bilanafos, Glyphosat, Glufosinat, Sulfosat;
- Aryloxyphenoxypropionate: Clodinafop, Cyhalofop-Butyl, Fenoxaprop, Fluazifop, Haloxyfop, Metamifop, Propaquizafop, Quizalofop, Quizalofop-P-Tefuryl;
- Bipyridyle: Diquat, Paraquat;
- (Thio)carbamate: Asulam, Butylat, Carbetamid, Desmedipham, Dimepiperat, Eptam (EPTC), Esprocarb, Molinat, Orbencarb, Phenmedipham, Prosulfocarb, Pyributicarb, Thiobencarb, Triallat;
- Cyclohexanedione: Butroxydim, Clethodim, Cycloxydim, Profoxydim, Sethoxydim, Tepraloxydim, Tralkoxydim;
- Dinitroaniline: Benfluralin, Ethalfluralin, Oryzalin, Pendimethalin, Prodiamin, Trifluralin;
- Diphenylether: Acifluorfen, Aclonifen, Bifenox, Diclofop, Ethoxyfen, Fomesafen, Lactofen, Oxyfluorfen;
- Hydroxybenzonitrile: Bomoxynil, Dichlobenil, loxynil;
- Imidazolinone: Imazamethabenz, Imazamox, Imazapic, Imazapyr, Imazaquin, Imazethapyr;
- Phenoxyessigsäuren: Clomeprop, 2,4-Dichlorophenoxyessigsäure (2,4-D), 2,4-DB, Dichlorprop, MCPA, MCPA-Thioethyl, MCPB, Mecoprop;
- Pyrazine: Chloridazon, Flufenpyr-Ethyl, Fluthiacet, Norflurazon, Pyridat;
- Pyridine: Aminopyralid, Clopyralid, Diflufenican, Dithiopyr, Fluridon, Fluroxypyr, Picloram, Picolinafen, Thiazopyr;
- Sulfonylharnstoffe: Amidosulfuron, Azimsulfuron, Bensulfuron, Chlorimuron-Ethyl, Chlorsulfuron, Cinosulfuron, Cyclosulfamuron, Ethoxysulfuron, Flazasulfuron, Flucetosulfuron, Flupyrsulfuron, Foramsulfuron, Halosulfuron, Imazosulfuron, lodosulfuron, Mesosulfuron, Metazosulfuron, Metsulfuron-Methyl, Nicosulfuron, Oxasulfuron, Primisulfuron, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron, 1-((2-Chloro-6-propyl-imidazo[1,2-b]pyridazin-3-yl)sulfonyl)-3-(4,6-dimethoxy-pyrimidin-2-yl)harnstoff;
- Triazine: Ametryn, Atrazin, Cyanazin, Dimethametryn, Ethiozin, Hexazinon, Metamitron, Metribuzin, Prometryn, Simazin, Terbuthylazin, Terbutryn, Triaziflam, Trifludimoxazin;
- Harnstoffe: Chlorotoluron, Daimuron, Diuron, Fluometuron, Isoproturon, Linuron, Methabenzthiazuron, Tebuthiuron;
- Weitere Acetolaktatsynthase-Inhibitoren: Bispyribac-Natrium, Cloransulam-Methyl, Diclosulam, Florasulam, Flucarbazon, Flumetsulam, Metosulam, Ortho-Sulfamuron, Penoxsulam, Propoxycarbazon, Pyribambenz-Propyl, Pyribenzoxim, Pyriftalid, Pyriminobac-Methyl, Pyrimisulfan, Pyrithiobac, Pyroxasulfon, Pyroxsulam;
- Andere: Amicarbazon, Aminotriazol, Anilofos, Beflubutamid, Benazolin, Bencarbazon, Benfluresat, Benzofenap, Bentazon, Benzobicyclon, Bicyclopyron, Bromacil, Bromobutid, Butafenacil, Butamifos, Cafenstrol, Carfentrazon, Cinidon-Ethyl, Chlorthal, Cinmethylin, Clomazon, Cumyluron, Cyprosulfamid, Dicamba, Difenzoquat, Diflufenzopyr, *Drechslera monoceras,* Endothal, Ethofumesat, Etobenzanid, Fenoxasulfon, Fentrazamid, Flumiclorac-Pentyl, Flumioxazin, Flupoxam, Flurochloridon, Flurtamon, Indanofan, Isoxaben, Isoxaflutol, Lenacil, Propanil, Propyzamid, Quinclorac, Quinmerac, Mesotrion, Methylarsensäure, Naptalam, Oxadiargyl, Oxadiazon, Oxaziclomefon, Pentoxazon, Pinoxaden, Pyraclonil, Pyraflufen-Ethyl, Pyrasulfotol, Pyrazoxyfen, Pyrazolynat, Quinoclamin, Saflufenacil, Sulcotrion, Sulfentrazon, Terbacil, Tefuryltrion, Tembotrion, Thiencarbazon, Topramezon, (3-[2-Chloro-4-fluoro-5-(3-methyl-2,6-dioxo-4-trifluoromethyl-3,6-dihydro-2H-pyrimidin-1-yl)-phenoxy]-pyridin-2-yloxy)-essigsäureethyl ester, 6-Amino-5-chloro-2-cyclopropyl-pyrimidin-4-carbonsäuremethylester, 6-Chloro-3-(2-cyclopropyl-6-methyl-phenoxy)-pyridazin-4-ol, 4-Amino-3-chloro-6-(4-chloro-phenyl)-5-fluoro-pyridin-2-carbonsäure, 4-Amino-3-chloro-6-(4-chloro-2-fluoro-3-methoxy-phenyl)-pyridin-2-carbonsäuremethylester, und 4-Amino-3-chloro-6-(4-chloro-3-dimethylamino-2-fluoro-phenyl)-pyridin-2-carbonsäuremethylester.

O) Insectizide

- Organo(thio)phosphate: Acephat, Azamethiphos, Azinphos-Methyl, Chlorpyrifos, Chlorpyrifos-Methyl, Chlorfenvinphos, Diazinon, Dichlorvos, Dicrotophos, Dimethoat, Disulfoton, Ethion, Fenitrothion, Fenthion, Isoxathion, Malathion, Methamidophos, Methidathion, Methyl-Parathion, Mevinphos, Monocrotophos, Oxydemeton-Methyl, Paraoxon, Parathion, Phenthoat, Phosalon, Phosmet, Phosphamidon, Phorat, Phoxim, Pirimiphos-Methyl, Profenofos, Prothiofos, Sulprophos, Tetrachlorvinphos, Terbufos, Triazophos, Trichlorfon;
- Carbamate: Alanycarb, Aldicarb, Bendiocarb, Benfuracarb, Carbaryl, Carbofuran, Carbosulfan, Fenoxycarb, Furathiocarb, Methiocarb, Methomyl, Oxamyl, Pirimicarb, Propoxur, Thiodicarb, Triazamat;
- Pyrethroide: Allethrin, Bifenthrin, Cyfluthrin, Cyhalothrin, Cyphenothrin, Cypermethrin, Alpha-Cypermethrin, Beta-Cypermethrin, Zeta-Cypermethrin, Deltamethrin, Esfenvalerat, Etofenprox, Fenpropathrin, Fenvalerat, Imiprothrin, Lambda-Cyhalothrin, Permethrin, Prallethrin, Pyrethrin I and II, Resmethrin, Silafluofen, Tau-Fluvalinat, Tefluthrin, Tetramethrin, Tralomethrin, Transfluthrin, Profluthrin, Dimefluthrin;
- Insektenwachstumsregulatoren: a) Chitinsynthese-Inhibitoren: Benzoylharnstoffe: Chlorfluazuron, Cyramazin, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazol, Clofentazin; b) Ecdyson-Antagonisten: Halofenozid, Methoxyfenozid, Tebufenozid, Azadirachtin; c) Juvenoide: Pyriproxyfen, Methopren, Fenoxycarb; d) Lipidbiosynthese-Inhibitoren: Spirodiclofen, Spiromesifen, Spirotetramat;
- Nikotinrezeptor-Agonisten/Antagonistenverbindungen: Clothianidin, Dinotefuran, Flupyradifuron, Imidacloprid, Thiamethoxam, Nitenpyram, Acetamiprid, Thiacloprid, 1-2-Chloro-thiazol-5-ylmethyl)-2-nitrimino-3,5-dimethyl-[1,3,5]triazinan;
- GABA-Antagonistenverbindungen: Endosulfan, Ethiprol, Fipronil, Vaniliprol, Pyrafluprol, Pyriprol, 5-Amino-1-(2,6-dichloro-4-methyl-phenyl)-4-sulfinamoyl-1H-pyrazol-3-carbothionsäureamid;
- Macrocyclische Lakton-Insektizide: Abamectin, Amamectin, Milbemectin, Lepimectin, Spinosad, Spinetoram;
- Mitochondriale Elektronentransportinhibitoren (METI) I Acarizide: Fenazaquin, Pyridaben, Tebufenpyrad, Tolfenpyrad, Flufenerim;
- METI II und III Verbindungen: Acequinocyl, Fluacyprim, Hydramethylnon;
- Entkoppler: Chlorfenapyr;
- Oxidative Phosphorylierungs-Inhibitoren: Cyhexatin, Diafenthiuron, Fenbutatinoxid, Propargit;
- Häutungsstörende Wirkstoffe: Cryomazin;
- Oxidase-Inhibitoren mit vermischter Wirkung: Piperonylbutoxid;
- Natriumkanalblocker: Indoxacarb, Metaflumizon;
- Ryanodin-Rezeptor-Inhibitoren: Chlorantraniliprol, Cyantraniliprol, Flubendiamid, N-[4,6-Dichloro-2-[(diethyl-lambda-4-sulfanyliden)carbamoyl]-phenyl]-2-(3-chloro-2-pyridyl)-5-(trifluoromethyl)pyrazol-3-carboxamid; N-[4-Chloro-2-[(diethyl-lambda-4-sulfanyliden)carbamoyl]-6-methyl-phenyl]-2-(3-chloro-2-pyridyl)-5-(trifluoromethyl)pyrazol-3-carboxamid; N-[4-Chloro-2-[(di-2-propyl-lambda-4-sulfanylidene)carbamoyl]-6-methyl-phenyl]-2-(3-chloro-2-pyridyl)-5-(trifluoromethyl)pyrazole-3-carboxamide; N-[4,6-Dichloro-2-[(di-2-propyl-lambda-4-sulfanyliden)carbamoyl]-phenyl]-2-(3-chloro-2-pyridyl)-5-(trifluoromethyl)pyrazol-3-carboxamid; N-[4,6-Dichloro-2-[(diethyl-lambda-4-sulfanyliden)carbamoyl]-phenyl]-2-(3-chloro-2-pyridyl)-5-(difluoromethyl)pyrazol-3-carboxamid; N-[4,6-Dibromo-2-[(di-2-propyl-lambda-4-sulfanyliden)carbamoyl]-phenyl]-2-(3-chloro-2-pyridyl)-5-(trifluoromethyl)pyrazol-3-carboxamid; N-[4-Chloro-2-[(di-2-propyl-lambda-4-sulfanyliden)carbamoyl]-6-cyano-phenyl]-2-(3-chloro-2-pyridyl)-5-(trifluoromethyl)pyrazol-3-carboxamid; N-[4,6-Dibromo-2-[(diethyl-lambda-4-sulfanyliden)carbamoyl]-phenyl]-2-(3-chloro-2-pyridyl)-5-(trifluoromethyl)pyrazol-3-carboxamid;
- Weitere: Benclothiaz, Bifenazat, Cartap, Flonicamid, Pyridalyl, Pymetrozin, Schwefel, Thiocyclam, Cyenopyrafen, Flupyrazofos, Cyflumetofen, Amidoflumet, Imicyafos, Bistrifluron, Pyrifluquinazon und 1,1'-[(3S,4R,4aR,6S,6aS,12R,12aS,12bS)-4-[[(2-Cyclopropylacetyl)oxy]methyl]-1,3,4,4a,5,6,6a,12,12a,12b-decahydro-12-hydroxy-4,6a,12b-trimethyl-11-oxo-9-(3-pyridinyl)-2H,11H-naphtho[2,1-b]pyrano[3,4-e]pyran-3,6-diyl]cyclopropanessigsäureester.

Die Pestizide ausgewählt aus den Gruppen L1), L3) und L5) umfassen bezüglich der Mischungen nicht nur die isolierten, reinen Kulturen der jeweiligen Mikroorganismen wie oben definiert, sondern auch die zellfreien Extrakte mit pestizider Wirkung, vorzugsweise einen keton-basierenden Extrakt, die Suspensionen davon in einer Gesamtkulturbrühe

oder als metaboliten-aufweisender Überstand oder ein gereinigter Metabolit erhalten aus einer Gesamtkulturbrühe eines Mikroorganismus oder Mikroorganismenstamms.

"Gesamtkulturbrühe" bezieht sich auf eine flüssige Kultur, die sowohl Zellen als auch Medium aufweist.

"Überstand" oder "Kulturmedium" bezieht sich auf die flüssige Brühe, die erhalten wird wenn die Zellen, die in der Brühe gezüchtet wurden, durch Zentrifugation, Filtration, Sedimentation, oder auf andere bekannte Weise entfernt werden.

Der Begriff "Metabolit" bezieht sich auf jede Verbindung, Substanz oder Nebenprodukt (einschließlich aber nicht limitierend auf sekundäre Metaboliten niederer Verbindungen, Polyketide, Fettsäuresyntheseprodukte, nicht-ribosomale Peptide, Proteine und Enzyme) hergestellt durch einen Mikroorganismus (wie Pilze oder Bakterien), der pestizide Aktivität aufweist oder das Pflanzenwachstum, die Wassernutzungseffizienz der Pflanze, die Pflanzengesundheit, das Erscheinungsbild der Pflanze, oder die Besiedlung mit vorteilhaften Mikroorganismen im Boden in der Umgebung der Pflanze verbessert.

Der Begriff "Mutant" bezieht sich auf einen Mikroorganismus, der durch direkte Mutantenselektion erhalten wurde, schließt aber auch Mikroorganismen ein, die zusätzlich mutiert oder auf andere Weise verändert wurden (beispielsweise durch die Einführung eines Plasmids). Demnach umfassen die Ausführungsformen Mutanten, Varianten und/oder Derivate der entsprechenden Mikroorganismen, d.h. sowohl natürlich vorkommende und künstlich erzeugte Mutanten. Beispielsweise können Mutanten erzeugt werden, indem Mikroorganismen mit bekannten Mutagenen, beispielsweise N-Methyl-nitroguanidine, unter üblichen Methoden behandelt werden. Vorzugsweise behalten diese Mutanten die pestizide Aktivität der entsprechenden Mikroorganismen.

Die Pestizide auf chemischer Basis sind durch ihre Gebrauchsnamen beschrieben, ihre Herstellung und biologische Aktivität, z.B. gegen schädliche Pilze, Schädlinge oder Unkräuter is bekannt (cf.: http://www.alanwood.net/pesticides/); diese Substanzen sind kommerziell erhältlich und bekannt, zum Beispiel durch die folgenden Referenzen:

Benalaxyl, Methyl *N*-(phenylacetyl)-*N*-(2,6-xylyl)-DL-alaninat (DE 29 03 612); Metalaxyl, Methyl *N*-(methoxyacetyl)-*N*-(2,6-xylyl)-DL-alaninat (GB 15 00 581); Ofurace, (RS)-α-(2-Chloro-*N*-2,6-xylylacetamido)-γ-Butyrolacton [CAS 58810-48-3]; Oxadixyl; *N*-(2,6-Dimethylphenyl)-2-methoxy-*N*-{2-oxo-3-oxazolidinyl)acetamid (GB 20 58 059); Aldimorph, "4-Alkyl-2,5 (or 2,6)-dimethylmorpholin", umfassend 65-75% 2,6-Dimethylmorpholin und 25-35% of 2,5-Dimethylmorpholin, umfassend mehr als 85% of 4-Dodecyl-2,5 (oder 2,6)-Dimethylmorpholin, wobei "Alkyl" auch Octyl, Decyl, Tetradecyl und Hexadecyl, mit einem cis/trans Verhältnis von 1:1 [91315-15-0] einschließt; Dodine, 1-Dodecylguanidiniumacetat (Plant Dis. Rep., Vol. 41, p.1029 (1957));

Dodemorph, 4-Cyclododecyl-2,6-dimethylmorpholin (DE 1198125); Fenpropimorph, (RS)-cis-4-[3-(4-Tert-butylphenyl)-2-methylpropyl]-2,6-dimethylmorpholin (DE 27 52 096); Fenpropidin, (RS)-1-[3-(4-Tert-butylphenyl)-2-methylpropyl]piperidin (DE 27 52 096); Guazatin, Gemisch der reaktionsprodukte der Amidierung von technischen Grad Iminodi(octamethylen)diamin, umfassend verschiedene Guanidine und Polyamine [108173-90-6]; Iminoctadin, 1,1'-Iminodi(octamethylen)diguanidin (Congr. Plant Pathol. 1, p.27 (1968); Spiroxamin, (8-Tert-butyl-1,4-dioxaspiro[4.5]dec-2-yl)diethylamin (EP-A 281 842); Tridemorph, 2,6-Dimethyl-4-tridecylmorpholin (DE 11 64 152); Pyrimethanil, 4,6-Dimethylpyrimidin-2-ylphenylamin (DD-A 151 404); Mepanipyrim, (4-Methyl-6-prop-1-ynylpyrimidin-2-yl)phenylamin (EP-A 224 339); Cyprodinil, (4-Cyclopropyl-6-methylpyrimidin-2-yl)phenylamin (EP-A 310 550); Cycloheximid, 4-{(2R)-2-[(1S,3S,5S)-3,5-Dimethyl-2-oxocyclohexyl]-2-hydroxyethyl}piperidin-2,6-dion [CAS RN 66-81-9]; Griseofulvin, 7-Chloro-2',4,6-trimethoxy-6'-methylspiro[benzofuran-2(3H),1'-Cyclohex-2'-en]-3,4'-dion [126-07-8]; Kasugamycin, 3-O-[2-Amino-4-[(carboxyiminomethyl)amino]-2,3,4,6-tetradeoxy-α-D-arabino-hexopyranosyl]-D-chiro-inositol [6980-18-3]; Natamycin, (8E,14E,16E,18E,20E)-(1R,3S,5R,7R,12R,22R,24S,25R,26S)-22-(3-Amino-3,6-dideoxy-β-D-mannopyranosyloxy)-1,3,26-trihydroxy-12-methyl-10-oxo-6,11,28-trioxatricyclo[22.3.1.05,7]octacosa-8,14,16,18,20-pentaene-25-carbonsäure [7681-93-8]; Polyoxin, 5-(2-Amino-5-O-carbamoyl-2-deoxy-L-xylonamido)-1-(5-carboxy-1,2,3,4-tetrahydro-2,4-dioxopyrimidin-1-yl)-1,5-dideoxy-β-D-allofuranuronic acid [22976-86-9]; Streptomycin, 1,1'-{1-L-(1,3,5/2,4,6)-4-[5-Deoxy-2-O-(2-deoxy-2-methylamino-α-L-glucopyranosyl)-3-C-formyl-α-L-lyxofuranosyloxy]-2,5,6-trihydroxycyclohex-1,3-ylene}diguanidin (J. Am. Chem. Soc. 69, p.1234 (1947)); Bitertanol, β-([1,1'-Biphenyl]-4-yloxy)-α-(1,1-dimethylethyl)-1H-1,2,4-triazol-1-ethanol (DE 23 24 020); Bromuconazol, 1-[[4-Bromo-2-(2,4-dichlorophenyl)tetrahydro-2-furanyl]methyl]-1H-1,2,4-triazol (Proc. Br. Crop. Prot. Conf. 1990 - Pests Dis. Vol. 1, p. 459); Cyproconazol, 2-(4-Chlorophenyl)-3-cyclopropyl-1-[1,2,4]triazol-1-ylbutan-2-ol (US 4 664 696); Difenoconazol, 1-{2-[2-Chloro-4-(4-chlorophenoxy)phenyl]-4-methyl-[1,3]dioxolan-2-ylmethyl}-1H-[1,2,4]triazol (GB-A 2 098 607); Diniconazol, (βE)-β-[(2,4-Dichlorophenyl)methylen]-α-(1,1-dimethylethyl)-1H-1,2,4-triazol-1-ethanol (Noyaku Kagaku, 1983, Vol. 8, p. 575); Enilconazol (Imazalil), 1-[2-(2,4-Dichlorphenyl)-2-(2-propenyloxy)ethyl]-1H-imidazol (Fruits 28, p. 545, 1973); Epoxiconazol, (2RS,3SR)-1-[3-(2-Chlorophenyl)-2,3-epoxy-2-(4-fluorophenyl)propyl]-1H-1,2,4-triazol (EP-A 196 038); Fenbuconazol, α-[2-(4-Chlorophenyl)ethyl]-α-phenyl-1H-1,2,4-triazol-1-propanenitril (Proc. Br. Crop Prot. Conf. 1988 - Pests Dis. Vol. 1, p. 33); Fluquinconazol, 3-(2,4-Dichlorophenyl)-6-fluoro-2-[1,2,4]-triazol-1-yl-3H-quinazolin-4-on (Proc. Br. Crop Prot. Conf.-Pests Dis., 5-3, 411 (1992)); Flusilazol, 1-{[bis-(4-Fluorophenyl)methylsilanyl]methyl}-1H-[1,2,4]triazol (Proc. Br. Crop Prot. Conf.-Pests Dis., 1, 413 (1984)); Flutriafol, α-(2-Fluorophenyl)-α-(4-fluorophenyl)-1H-1,2,4-triazole-1-ethanol (EP 15 756); Hexaconazol, 2-(2,4-Dichlorophenyl)-1-[1,2,4]triazol-1-ylhexan-2-ol [79983-71-4]; Ipconazol, 2-[(4-Chlorophenyl)methyl]-5-(1-methylethyl)-1-(1H-1,2,4-triazol-1-ylmethyl)cyclopentanol (EP 267 778), Metconazol, 5-(4-Chlorobenzyl)-2,2-dimethyl-1-[1,2,4]triazol-1-ylmethylcyclopentanol (GB 857 383); Myclobutanil, 2-(4-Chlorophenyl)-2-[1,2,4]triazol-1-ylmethylpentanenitril [88671-89-0]; Penconazol, 1-[2-(2,4-Dichlorophenyl)pentyl]-1H-[1,2,4]triazol (Pesticide Manual, 12th Ed. (2000), S.712); Propiconazol, 1-[[2-(2,4-Dichlorophenyl)-4-propyl-1,3-dioxolan-2-yl]methyl]-1H-1,2,4-triazol (BE 835 579); Prochloraz, *N*-(Propyl-[2-(2,4,6-trichlorophenoxy)ethyl])imidazol-1-carboxamid (US 3 991 071); Prothioconazol, 2-[2-(1-Chlorocyclopropyl)-3-(2-chlorophenyl)-2-hydroxypropyl]-2,4-dihydro-[1,2,4]triazol-3-thion (WO 96/16048); Simeconazol, α-(4-Fluorophenyl)-α-[(trimethylsilyl)methyl]-1H-1,2,4-triazol-1-ethanol [CAS RN 149508-90-7]; Tebuconazol, 1-(4-Chlorophenyl)-4,4-dimethyl-3-[1,2,4]triazol-1-ylmethylpentan-3-ol (EP-A40 345); Tetraconazol, 1-[2-(2,4-Dichlorophenyl)-3-(1,1,2,2-tetrafluoroethoxy)propyl]-1H-1,2,4-triazol (EP 234 242); Triadimefon, 1-(4-Chlorophenoxy)-3,3-dimethyl-1-(1H-1,2,4-triazol-1-yl)-2-butanon (BE 793 867); Triadimenol, β-(4-Chlorophenoxy)-α-(1,1-dimethylethyl)-1H-1,2,4-triazole-1-ethanol (DE 23 24 010); Triflumizol, (4-Chloro-2-trifluoromethylphenyl)-(2-propoxy-1-[1,2,4]triazol-1-ylethyliden)-amin (JP-A 79/119 462); Triticonazol, (5E)-5-[(4-Chlorophenyl)methylene]-2,2-dimethyl-1-(1H-1,2,4-triazol-1-ylmethyl)cyclopentanol (FR 26 41 277); Iprodion, *N*-Isopropyl-3-(3,5-dichlorophenyl)-2,4-dioxoimidazolidine-1-carboxamid (GB 13 12 536); Myclozolin, (RS)-3-(3,5-Dichlorophenyl)-5-methoxymethyl-5-methyl-1,3-oxazolidin-2,4-dion [54864-61-8]; Procymidon, *N*-(3,5-Dichlorophenyl)-1,2-dimethylcyclopropane-1,2-dicarboximid (US 3 903 090); Vinclozolin, 3-(3,5-Dichlorophenyl)-5-methyl-5-vinyloxazolidin-2,4-dion (DE A 22 07 576); Ferbam, Eisen(3+)Dimethyldithiocarbamat (US 1 972 961); Nabam, Dinatrium Ethylenebis(dithiocarbamat) (US 2 317 765); Maneb, Mangan Ethylenebis(dithiocarbamat) (US 2 504 404); Mancozeb, Mangan Ethylenebis(dithiocarbamat) Polymerkomplex Zinksalz (GB 996 264); Metam, Methyldithiocarbaminsäure (US 2 791 605); Metiram,Zinkammoniat Ethylenbis(dithiocarbamat) (US 3 248 400); Propineb, Zink Propylenbis(dithiocarbamat) Polymer (BE 611 960); Polycarbamat, Bis(dimethylcarbamodithioato-S,S')[μ-[[1,2-ethanediylbis[carbamodithioato-S,S']](2-)]]di[Zink] [64440-88-6]; Thiram, Bis(dimethylthiocarbamoyl)disulfid (DE 642 532); Ziram, Dimethyldithiocarbamat [137-30-4]; Zineb, Zink Ethylenebis(dithiocarbamat) (US 2 457 674); Anilazin, 4,6-Dichloro-*N*-(2-chlorophenyl)-1,3,5-triazine-2-amin (US 2 720 480); Benomyl, *N*-Butyl-2-acetylaminobenzoimidazol-1-carboxamid (US 3 631 176); Boscalid, 2-Chloro-*N*-(4'-chlorobiphenyl-2-yl)nicotinamid (EP-A 545 099); Carbendazim, Methyl (1H-benzoimidazol-2-yl)carbamat (US 3 657 443); Carboxin, 5,6-Dihydro-2-methyl-*N*-phenyl-1,4-oxathiin-3-carboxamid (US 3 249 499); Oxycarboxin, 5,6-Dihydro-2-methyl-1,4-oxathiin-3-carboxanilid 4,4-dioxid (US 3 399 214); Cyazofamid, 4-Chloro-2-cyano-N,*N*-dimethyl-5-(4-methylphenyl)-1H-imidazol-1-sulfonamid [120116-88-3]; Dazomet, 3,5-Dimethyl-1,3,5-thiadiazinan-2-thion (Bull. Soc. Chim. Fr. 15, p. 891 (1897)); Dithianon, 5,10-Dioxo-5,10-dihydronaphtho[2,3-b][1,4]dithiin-2,3-dicarbonitril (GB 857 383); Famoxadon, (RS)-3-Anilino-5-methyl-5-(4-phenoxyphenyl)-1,3-oxazolidin-2,4-dion [131807-57-3]; Fenamidon, (S)-1-Anilino-4-methyl-2-methylthio-4-phenylimidazolin-5-on [161326-34-7]; Fenarimol, α-(2-Chlorophenyl)-α-(4-chlorophenyl)-5-pyrimidinemethanol (GB 12 18 623); Fuberidazol, 2-(2-Furanyl)-1H-benzimidazol (DE 12 09 799); Flutolanil, α,α,α-Trifluoro-3'-isopropoxy-o-toluanilid (JP 1104514); Furametpyr, 5-Chloro-*N*-(1,3-dihydro-1,1,3-trimethyl-4-isobenzofuranyl)-1,3-dimethyl-1H-pyrazol-4-carboxamid [123572-88-3]; Isoprothiolan, Diisopropyl 1,3-dithiolan-2-ylidenemalonat (Proc. Insectic. Fungic. Conf. 8. Vol. 2, p. 715 (1975)); Mepronil, 3'-Isopropoxy-o-toluanilid (US 3 937 840); Nuarimol, α-(2-Chloro-phenyl)-α-(4-fluorophenyl)-5-pyrimidinmethanol (GB 12 18 623); Fluopicolid (Picobenzamid), 2,6-Dichloro-*N*-(3-chloro-5-trifluoromethylpyridin-2-ylmethyl)benzamid (WO 99/42447); Probenazol, 3-Allyloxy-1,2-benzothiazol 1,1-dioxid (Agric. Biol. Chem. 37, p. 737 (1973)); Proquinazid, 6-lodo-2-propoxy-3-propylquinazolin-4(3H)-on (WO 97/48684); Pyrifenox, 2',4'-Dichloro-2-(3-pyridyl)acetophenon (EZ)-O-Methyloxim (EP 49 854); Pyroquilon, 1,2,5,6-Tetrahydropyrrolo[3,2,1-ij]quinolin-4-on (GB 139 43 373) Quinoxyfen, 5,7-Dichloro-4-(4-fluorophenoxy)quinolin (US 5 240 940); Silthiofam, *N*-Allyl-4,5-dimethyl-2-(trimethylsilyl)thiophen-3-carboxamid [CAS RN 175217-20-6]; Thiabendazol, 2-(1,3-Thiazol-4-yl)benzimidazol (US 3 017 415); Thifluzamid, 2',6'-Dibromo-2-methyl-4'-trifluormethoxy-4-trifluormethyl-1,3-thiazol-5-carboxanilid [130000-40-7]; Thiophanat-Methyl, 1,2-Phenylenbis(iminocarbonothioyl)bis(dimethylcarbamat) (DE-A 19 30 540); Tiadinil, 3'-Chloro-4,4'-dimethyl-1,2,3-thiadiazole-5-carboxanilid [223580-51-6]; Tricyclazol, 5-Methyl-1,2,4-triazolo[3,4-b][1,3]benzothiazol [CAS RN 41814-78-2]; Triforin, N,N'-{Piperazin-1,4-diylbis[(trichlormethyl)methylen]}diformamid (DE 19 01 421); Bordeaux Mischung, Mischung von $CuSO_4$ x $3Cu(OH)_2$ x $3CaSO_4$ [8011-63-0]; Kupferacetat, $Cu(OCOCH_3)_2$ [8011-63-0]; Kupferoxychlorid, $Cu_2Cl(OH)_3$ [1332-40-7]; Basisches Kupfersulfat, $CuSO_4$ [1344-73-6]; Binapacryl, (RS)-2-sec-Butyl-4,6-dinitrophenyl 3-methylcrotonat [485-31-4]; Dinocap, Mischung von 2,6-Dinitro-4-octylphenylcrotonat und 2,4-Dinitro-6-octylphenylcrotonat, wobei "Octyl" eine Mischung von 1-Methylheptyl, 1-Ethylhexyl and 1-Propylpentyl (US 2 526 660) darstellt; Dinobuton, (RS)-2-sec-Butyl-4,6-Dinitrophenylisopropylcarbonat [973-21-7]; Nitrothal-isopropyl, Diisopropyl 5-nitroisophthalat (Proc. Br. Insectic. Fungic. Conf. 7., Vol. 2, p. 673 (1973)); Fenpiclonil, 4-(2,3-dichlorophenyl)-1H-pyrrol-3-carbonitril (Proc. 1988 Br. Crop Prot. Conf. - Pests Dis., Vol. 1, p. 65); Fludioxonil, 4-(2,2-Difluorobenzo[1,3]dioxol-4-yl)-1H-pyrrol-3-carbonitril (The Pesticide Manual, publ. The British Crop Protection Council, 10th ed. (1995), p.

482); Aacibenzolar-*S*-methyl, Methyl 1,2,3-benzothiadiazol-7-carbothioat [135158-54-2]; Flubenthiavalicarb (Benthiavalicarb), Isopropyl {(S)-1-[(1R)-1-(6-fluorobenzothiazol-2-yl)-ethylcarbamoyl]-2-methylpropyl}carbamat (JP-A 09/323 984); Carpropamid, 2,2-Dichloro-*N*-(1-(4-chlorophenyl)ethyl]-1-ethyl-3-methylcyclopropancarboxamid [CAS RN 104030-54-8]; Chlorothalonil, 2,4,5,6-Tetrachloroisophthalonitril (US 3 290 353); Cyflufenamid, (Z)-*N*-[α-(Cyclopropylmethoxyimino)-2,3-difluoro-6-(trifluoromethyl)benzyl]-2-phenylacetamid (WO 96/19442); Cymoxanil, 1-(2-Cyano-2-methoxyiminoacetyl)-3-ethylharnstoff (US 3 957 847); Diclomezin, 6-(3,5-Dichlorophenyl-p-tolyl)pyridazin-3(2H)-on (US 4 052 395) Diclocymet, (RS)-2-cyano-*N*-(R)-1-(2,4-dichlorophenyl)ethyl]-3,3-dimethylbutyramid [139920-32-4]; Diethofencarb, Isopropyl 3,4-diethoxycarbanilat (EP 78 663); Edifenphos, O-Ethyl S,S-diphenyl phosphorodithioat (DE 14 93 736) Ethaboxam, *N*-(Cyano-2-thienylmethyl)-4-ethyl-2-(ethylamino)-5-thiazolcarboxamid (EP-A 639 574); Fenhexamid, *N*-(2,3-Dichloro-4-hydroxyphenyl)-1-methylcyclohexancarboxamid (Proc. Br. Crop Prot. Conf. - Pests Dis., 1998, Vol. 2, p. 327); Fentinacetate, Triphenyltin (US 3 499 086); Fenoxanil, *N*-(1-Cyano-1,2-dimethylpropyl)-2-(2,4-dichlorophenoxy)-propanamid (EP 262 393); Ferimzon, Mepanipyrim, (Z)-2'-Methylacetophenon-4,6-dimethylpyrimidin-2-ylhydrazon [89269-64-7]; Fluazinam, 3-Chloro-*N*-[3-chloro-2,6-dinitro-4-(trifluorome-thyl)phenyl]-5-(trifluoromethyl)-2-pyridinamin (The Pesticide Manual, publ. The British Crop Protection Council, 10th ed. (1995), p. 474); Fosetyl, Fosetyl-aluminum, Ethylphosphonat (FR 22 54 276); Iprovalicarb, Isopropyl [(1S)-2-Methyl-1-(1-p-tolylethylcarbamoyl)propyl]carbamat (EP-A 472 996); Hexachlorobenzol (C. R. Seances Acad. Agric. Fr. 31, p. 24, 1945); Metrafenon, 3'-Bromo-2,3,4,6'-tetramethoxy-2',6-dimethylbenzophenon (US 5 945 567); Pencycuron, 1-(4-Chlorobenzyl)-1-cyclopentyl-3-phenylharnstoff (DE 27 32 257); Penthiopyrad, (RS)-*N*-[2-(1,3-Dimethylbutyl)-3-thienyl]-1-methyl-3-(trifluoromethyl)-1H-pyrazol-4-carboxamid (JP 10130268); Propamocarb, Propyl 3-(dimethylamino)propylcarbamat (DE 15 67 169); Phthalid (DE 16 43 347); Toloclofos-Methyl, O-2,6-Dichloro-p-tolyl O,O-dimethyl phosphorothioat (GB 14 67 561); Quintozen, Pentachlornitrobenzol (DE 682 048); Zoxamid, (RS)-3,5-Dichloro-*N*-(3-chloro-1-ethyl-1-methyl-2-oxopropyl)-p-toluamid [CAS RN 156052-68-5]; Azoxystrobin, Methyl 2-{2-[6-(2-Cyano-1-vinylpenta-1,3-dienyloxy)pyrimidin-4-yloxy]phenyl}-3-methoxyacrylat (EP 382 375), Dimoxystrobin, (E)-2-(Methoxyimino)-*N*-methyl-2-[α-(2,5-xylyloxy)-O-tolyl]acetamid (EP 477 631); Enestroburin, Methyl 2-{2-[3-(4-Chlorophenyl)-1-methylallylidenaminooxymethyl]-phenyl}-3-methoxyacrylat (EP 936 213); Fluoxastrobin, (E)-{2-[6-(2-Chlorophenoxy)-5-fluoropyrimidin-4-yloxy]phenyl}(5,6-dihydro-1,4,2-dioxazin-3-yl)methanon O-methyloxim (WO 97/27189); Kresoxim-methyl, Methyl (E)-methoxyimino[α-(o-tolyloxy)-o-tolyl]acetat (EP 253 213); Metominostrobin, (E)-2-(Methoxyimino)-*N*-methyl-2-(2-phenoxyphenyl)acetamid (EP 398 692); Orysastrobin, (2E)-2-(methoxyimino)-2-{2-[(3E,5E,6E)-5-(methoxyimino)-4,6-dimethyl-2,8-dioxa-3,7-diazanona-3,6-dien-1-yl]phenyl}-*N*-methylacetamid (WO 97/15552); Picoxystrobin, Methyl 3-methoxy-2-[2-(6-trifluoromethylpyridin-2-yloxymethyl)phenyl]acrylat (EP 278 595); Pyraclostrobin, Methyl *N*-{2-[1-(4-chlorophenyl)-1H-pyrazol-3-yloxymethyl]phenyl}(*N*-methoxy)carbamat (WO 96/01256); Trifloxystrobin, Methyl (E)-Methoxyimino-{(E)-α-[1-(α,α,α-trifiuoro-m-tolyl)ethylidenaminooxy]-o-tolyl}acetat (EP 460 575); Captafol, *N*-(1,1,2,2-Tetrachloroethylthio)cyclohex-4-en-1,2-dicarboximid (Phytopathology, Vol. 52, p. 754 (1962)); Captan, *N*-(Trichloromethylthio)cyclohex-4-en-1,2-dicarboximid (US 2 553 770); Dichlofluanid, *N*-Dichlorofluoromethylthio-N',N'-dimethyl-*N*-phenylsulfamid (DE 11 93 498); Folpet, *N*-(Trichlormethylthio)phthalimid (US 2 553 770); Tolylfluanid, *N*-Dichlorofluoromethylthio-N',N'-dimethyl-*N*-p-tolylsulfamid (DE 11 93 498); Dimethomorph, 3-(4-Chlorophenyl)-3-(3,4-dimethoxyphenyl)-1-morpholin-4-yl-propenon (EP 120 321); Flumetover, 2-(3,4-Dimethoxyphenyl)-*N*-ethyl-α,α,α-trifluoro-*N*-methyl-p-toluamid [AGROW no. 243, 22 (1995)]; Flumorph, 3-(4-Fluorophenyl)-3-(3,4-dimethoxyphenyl)-1-morpholin-4-ylpropenon (EP 860 438); 5-Amino-2-isopropyl-3-oxo-4-o-tolyl-2,3-dihydro-pyrazol-1-carbothionsäure *S*-allyl Ester (CN1939128).

Die Herstellung und die fungizide Wirkung der Pestizide, die in der IUPC Nomenklatur beschrieben sind, ist auch bekannt (cf. Can. J. Plant Sci. 48(6), 587-94, 1968; EP-A 141 317; EP-A 152 031; EP-A 226917; EP-A 243 970; EP-A 256 503; EP-A 428 941; EP-A 532 022; EP-A 1 028 125; EP-A 1 035 122; EP-A 1 201 648; EP-A 1 122 244, JP 2002316902; DE 19650197; DE 10021412; DE 102005009458; US 3,296,272; US 3,325,503; WO 98/46608; WO 99/14187; WO 99/24413; WO 99/27783; WO 00/29404; WO 00/46148; WO 00/65913; WO 01/54501; WO 01/56358; WO 02/22583; WO 02/40431; WO 03/10149; WO 03/11853; WO 03/14103; WO 03/16286; WO 03/53145; WO 03/61388; WO 03/66609; WO 03/74491; WO 04/49804; WO 04/83193; WO 05/120234; WO 05/123689; WO 05/123690; WO 05/63721; WO 05/87772; WO 05/87773; WO 06/15866; WO 06/87325; WO 06/87343; WO 07/82098; WO 07/90624, WO 11/028657, WO2012/168188, WO 2007/006670, WO 2011/77514; WO13/047749, WO 10/069882, WO 13/047441, WO 03/16303, WO 09/90181, WO 13/007767, WO 13/010862, WO 13/127704, WO 13/024009, WO 13/024010, WO 2013/047441, WO 13/162072, WO 13/092224).

Die Biopestizide der Gruppe L), ihre Herstellung und ihre pestizide Wirkung, z. B. gegen schädliche Pilze oder Insekten ist bekannt (e-Pesticide Manual V 5.2 (ISBN 978 1 901396 85 0) (2008-2011); http://www.epa.gov/opp00001/biopesticides/, siehe die darin angegebenen Produktlisten; http://www.omri.org/omri-lists, siehe die darin angegebenen Listen; Bio-Pesticides Database BPDB http://sitem.herts.ac.uk/aeru/bpdb/, siehe das Link A bis Z darin).

Die Biopestizide der Gruppe L1) und/oder L2) haben auch insektizide, acarizide, molluskizide, Pheromonartige,

nematizide, Pflanzenstress-reduzierende, Pflanzenwachstum-regulierende, Pflanzenwachstum-fördernde, und/oder ertragssteigernde Wirkung.

Die Biopestizide der Gruppen L3) und/oder L4) haben auch fungizide, bakterizide, virizide, Pflanzenabwehr-aktivierende, Pflanzenstress-reduzierende, Pflanzenwachstums-regulierende, Pflanzenwachstums-fördernde und/oder ertragssteigernde Wirkung.

Die Biopestizide der Gruppe L5) und L6) haben auch fungizide, bakterizidem virizide, Pflanzenabwehr-aktivierende, insektizide, akarizide, molluskizide, Pheromon-artige und/oder nematizide Wirkung.

Viele dieser Biopestizide wurden unter Verwendung von hier erwähnten Hinterlegungsnummern hinterlegt (die Präfixe beziehen sich auf die Abkürzungen der entsprechenden Kultursammlung), in der Literatur genannt und/oder sind kommerziell erhältlich: Aluminiumsilikat (Screen™ Duo von Certis LLC, USA), *Agrobacterium radiobacter* K1026 (z. B. NoGall® von BASF Agricultural Specialties Pty Ltd, Australia), *A. radiobacter* K84 (Nature 280, 697-699, 1979; z. B. Gall-Troll® von AG Biochem, Inc., C, USA), *Ampelomyces quisqualis* M-10 (z. B. AQ 10® von Intrachem Bio GmbH & Co. KG, Deutschland), *Ascophyllum nodosum* (Norwegian kelp, Brown kelp) Extract oder Filtrat (z. B. ORKA GOLD von BASF Agricultural Specialities (Pty) Ltd., Südafrika; oder Goemar® von Laboratoires Goemar, Frankreich), *Aspergillus flavus* NRRL 21882 isoliert von einer Erdnuss in Georgia, 1991 durch USDA, National Peanut Research Laboratory (z. B. in Afla-Guard® von Syngenta, CH), Mischungen von *Aureobasidium pullulans* DSM 14940 und DSM 14941 (z. B. blastospores in BlossomProtect® von bio-ferm GmbH, Deutschland), *Azospirillum amazonense* SpY2 (DN: BR 11140; Proc. 9th Int. und 1st Latin American PGPR meeting, Quimara, Medellín, Colombia 2012, p. 60, ISBN 978-958-46-0908-3), *A. brasilense* AZ39 (auch bezeichnet als Az 39; INTA Az-39; Eur. J. Soil Biol 45(1), 28-35, 2009), *A. brasilense* XOH (z. B. AZOS von Xtreme Gardening, USA oder RTI Reforestation Technologies International; USA), *A. brasilense* BR 11002 (Proc. 9th Int. und 1st Latin American PGPR meeting, Quimara, Medellín, Colombia 2012, p. 60, ISBN 978-958-46-0908-3), *A. brasilense* Sp245 (BR 11005; z. B. in GELFIX Gramineas von BASF Agricultural Specialties Ltd., Brazil), *A. brasilense* Stämme Ab-V5 und Ab-V6 (z. B. in AzoMax von Novozymes BioAg Produtos papra Agricultura Ltda., Quattro Barras, Brazil oder SimbioseMaíz® von Simbiose-Agro, Cruz Alta, RS, Brazil; Plant Soil 331, 413-425, 2010), *A. lipoferum* BR 11646 (Sp31) (Proc. 9th Int. und 1st Latin American PGPR meeting, Quimara, Medellín, Colombia 2012, p. 60), *Bacillus altitudinis* 41KF2b (DSM 21631; Int. J. Syst. Evol. Microbiol. 56(7), 1465-1473, 2006), *Bacillus amyloliquefaciens* Stämme AP-136 (NRRL B-50614 und B-50330), AP-188 (NRRL B-50615 und B-50331), AP-218 (NRRL B-50618), AP-219 (NRRL B-50619 und B-50332), und AP-295 (NRRL B-50620 und B-50333) alle bekannt aus US 8,445,255; *B. amyloliquefaciens* IT-45 (CNCM I-3800) (z. B. Rhizocell C aus ITHEC, Frankreich), *B. amyloliquefaciens* IN937a (J. Microbiol. Biotechnol. 17(2), 280-286, 2007; z. B. BioYield® von Gustafson LLC, TX, USA), *B. amyloliquefaciens* spp. *plantarum* D747 (US 20130236522 A1; FERM BP-8234; z. B. Double Nickel™ 55 WDG oder Double Nickel™ LC von Certis LLC, USA), *B. amyloliquefaciens* spp. *plantarum* FZB24 isoliert aus Pflanzenpathogen-infiziertem Boden eines Feldes der Zuckerrübe in Brandenburg, Deutschland (auch bezeichnet als SB3615; DSM ID 96-2; J. Plant Dis. Prot. 105, 181-197, 1998; z. B. Taegro® von Novozyme Biologicals, Inc., USA),), *B. amyloliquefaciens* spp. *plantarum* SB3615vPPI, eine Phagen-resistante Variante von FZB24 (MRRL B-50349; US 2011/023045 A1; von Novozyme Biologicals, Inc., USA), *B. amyloliquefaciens* ssp. *plantarum* FZB42 isoliert aus Pflanzenpathogen-infiziertem Boden eines Feldes der Zückerrübe in Brandenburg, Deutschland (J. Plant Dis. Prot. 105, 181-197, 1998; DSM 23117; z. B. RhizoVital® 42 aus AbiTEP GmbH, Berlin, Deutschland), *B. amyloliquefaciens* ssp. *plantarum* GB03 (auch bezeichnet als GBO3; ATCC SD-1397; Phytopathol. 86(11), S36, 1996; z. B. Kodiak® oder BioYield® von Gustafson, Inc., USA; oder Companion® von Growth Products, Ltd., White Plains, NY 10603, USA), *B. amyloliquefaciens* ssp. *plantarum* MBI600 auch bezeichnet als 1430 (NRRL B-50595; Int. J. Microbiol. Res. 3(2) (2011), 120-130; US 2012/0149571 A1; z. B. Integral®, Subtilex® NG von BASF Corp., USA), *B. amyloliquefaciens* spp. *plantarum* TJ1000 (auch bezeichnet als 1BE; CA 2471555 A1; ATCC BAA-390; z.B. QuickRoots™ von TJ Technologies, Watertown, SD, USA), *B. cereusCNCM* I-1562 (US 6,406,690), *B. chitinosporus* AQ746 isoliert aus Wurzeln in Saskatchewan, Canada (NRRL B-21618; US 5,733,544; AgraQuest now Bayer CropScience LP, USA), *B. firmus* CNCM I-1582 (WO 2009/126473, WO 2009/124707, US 6,406,690; z.B. Votivo® von Bayer CropScience LP, USA), *B. megaterium* Stämme H491 (NRRL B-50769), M018 (NRRL B-50770) und J142 (NRRL B-50771) alle bekannt aus US 2014/0051571 A1 von Marrone BioInnovations, Inc., USA; *B. mojavensis* AP-209 (NRRL B-50616; US 8,445,255), *B. mycoides* AQ726 (NRRL B-21664; US 5,906,818; from Bayer Crop Science, Deutschland), *B. mycoides* strain J (z.B. BmJ WG von Certis, USA gegen Kartoffelvirus Y), *B. pumilus* GB34 (ATCC 700814; z. B. YieldShield® von Gustafson LLC, TX, USA), *B. pumilus* GHA 180 isoliert aus Rhizospäre des Apfelbaums in Mexico (IDAC 260707-01; z.B. in PRO-MIX® BX von Premier Horticulture, 1, avenue Premier, Rivie're-du-Loup, Quebec, Canada G5R6C1), *B. pumilus* KFP9F (NRRL B-50754; WO 2014/029697; z.B. BAC-UP oder FUSION-P von BASF Agricultural Specialities (Pty) Ltd., South Africa), *B. pumilus* INR-7 ansonsten bezeichnet als BU-F22 und BU-F33 (NRRL B-50185, NRRL B-50153; US 8,445,255), *B. pumilus* QST 2808 (NRRL B-30087; z.B. Sonata® oder Ballad® Plus von AgraQuest Inc., USA), *B. solisalsi* AP-217 (NRRL B-50617; US 8,445,255), *B. subtilis* CX-9060 (Federal Register 77(7), 1633-1637; von Certis U.S.A., L.L.C.), *B. subtilis* FB17 auch bezeichnet als UD 1022 oder UD10-22 isoliert aus Rote Beete Wurzeln in North America (ATCC PTA-11857; System. Appl. Microbiol. 27, 372-379, 2004; US 2010/0260735; WO 2011/109395); *B. subtilis* GB07 (Phytopathol. 86(11), S36, 1996; Epic® von Gustafson,

Inc., USA), *B. subtilis* QST-713 isoliert aus einem Kalifornischen Pfirsichgarten in 1995 (NRRL B-21661; z.B. Rhapsody®, Serenade® MAX oder Serenade® ASO von AgraQuest Inc., USA), *B. thuringiensis* ssp. *aizawai* ABTS-1857 (auch bezeichnet als ABG-6346; ATCC SD-1372; z.B. XenTari® von BioFa AG, Münsingen, Deutschland), *B. t.* ssp. *aizawai* SAN 401 I, ABG-6305 (WO 2013/087709); *Bacillus t.* ssp. *israelensis* AM65-52 des Serotype H-14 (ATCC SD-1276; z.B. VectoBac® von Valent BioSciences, IL, USA), *Bacillus thuringiensis* ssp. *kurstaki* SB4 (NRRL B-50753; z.B. Beta Pro® von BASF Agricultural Specialities (Pty) Ltd., Südafrika Africa), *B. t.* ssp. *kurstaki* ABTS-351 identisch zu HD-1 (ATCC SD-1275; z.B. Dipel® DF von Valent BioSciences, IL, USA), *B. t.* ssp. *kurstaki* EG 2348 (NRRL B-18208; z.B. Lepinox® oder Rapax® von CBC (Europe) S.r.l., Italien), *B. t.* ssp. *tenebrionis* DSM 2803 des Serotype H 8a, 8b (identisch zu NRRL B-15939; EP 0 585 215 B1; Mycogen Corp.), *B. t.* ssp. *tenebrionis* NB-125 (auch bezeichnet als SAN 418 I oder ABG-6479; EP 0 585 215 B1; DSM 5526; früherer Produktionsstamm von Novo-Nordisk), *B. t.* ssp. *tenebrionis* NB-176 (or NB-176-1; ein gamma-bestrahlter, induzierter hoch-produktiver Mutant des Stammes NB-125; EP 585 215 B1; DSM 5480; z.B. Novodor® von Valent BioSciences, Switzerland), *Beauveria bassiana* JW-1 (ATCC 74040; z. B. Naturalis® von CBC (Europe) S.r.l., Italien), *B. bassiana* DSM 12256 (US 200020031495; z.B. BioExpert® SC von Live Systems Technology S.A., Colombia), *B. bassiana* GHA (ATCC 74250; z.B. BotaniGard® 22WGP von Laverlam Int. Corp., USA), *B. bassiana* PPRI 5339 (ARSEF 5339; NRRL 50757; z.B. BroadBand® von BASF Agricultural Specialities (Pty) Ltd., Südafrika), *B. brongniartii* zur Bekämpfung des Maikäfers (J. Appl. Microbiol. 100(5),1063-72, 2006; z.B. Melocont® von Agrifutur, Agrianello, Italy), *Bradyrhizobium* sp. (z.B. Vault® von BASF Corp., USA), *B.* sp. (Arachis) CB1015 vermutlich ursprünglich gesammelt in Indien (IITA 1006, USDA 3446; von Australian Inoculants Research Group; http://www.qaseeds.com.au/inoculant_applic.php). *B.* sp. (Arachis) Stämme hinterlegt bei SEMIA und bekannt aus FEMS Microbiol. Letters 303(2), 123-131, 2010; Revista Brasileira de Ciencia do Solo 35(3), 739-742, 2011, ISSN 0100-0683: SEMIA 6144, SEMIA 6462 (BR 3267) und SEMIA 6464 (BR 3262); B. sp. (Vigna) PNL01 (Bisson und Mason, April 29, 2010, Projektbericht, Worcester Polytechnic Institute, Worcester, MA, USA: http://www.wpi.edu/Pubs/E-project/Available/E-project-042810-163614/; z.B. Vault® Peanut Liquid von BASF Corp., USA), *B. elkanii* SEMIA 587 (Appl. Environ. Microbiol. 73(8), 2635, 2007; z.B. GELFIX 5 von BASF Agricultural Specialties Ltd., Brasilien), *B. elkanii* SEMIA 5019 (=29W; Appl. Environ. Microbiol. 73(8), 2635, 2007; z.B. GELFIX 5 von BASF Agricultural Specialties Ltd., Brasilien), *B. elkanii* USDA 76, *B. elkanii* USDA 94*B. elkanii* USDA 3254, *B. elkanii* U-1301 und U-1302 (z.B. Nitragin® Optimize von Novozymes Bio As S.A., Brasilien, oder Nitrasec aus Sojabohne von LAGE y Cia, Brasilien), *B. japonicum* (z.B. VAULT® von BASF Corp., USA), *B. japonicum* 532c isoliert aus einem Fel von Wisconsin (Nitragin 61A152; Can. J. Plant. Sci. 70, 661-666, 1990; z.B. in Rhizoflo®, Histick®, Hicoat® Super von BASF Agricultural Specialties Ltd., Canada), *B. japonicum* E-109 Variante des Stammes USDA 138 (INTA E109, SEMIA 5085; Eur. J. Soil Biol. 45, 28-35, 2009; Biol. Fertil. Soils 47, 81-89, 2011), *B. japonicum* G49 (MSDJ G49; C. R. Acad. Agric. Fr. 73, 163-171, 1987); *B. japonicum* Stämme hinterlegt bei SEMIA bekannt aus Appl. Environ. Microbiol. 73(8), 2635, 2007: SEMIA 566 1966 isoliert aus einem nordamerikanischen Impfstoff und verwendet in brasilianischen, kommerziellen Impfstoffen aus den Jahren 1966 bis 1978, SEMIA 586 ursprünglich 1961 isoliert in Maryland, USA, aber 1966 erhalten aus Australien und in brasilianischen Impfstoffen 1977 verwendet (CB 1809, USDA 136, Nitragin 61A136, RCR 3407), SEMIA 5079 eine natürliche Variante aus SEMIA 566 seit 1992 in kommerziellen Impfstoffen verwendet (CPAC 15; z.B. GELFIX 5 oder ADHERE 60 aus BASF Agricultural Specialties Ltd., Brasilien), *B. japonicum* SEMIA 5080 eine natürliche Variante aus SEMIA 586 verwendet seit 1992 in kommerziellen Impfstoffen (CPAC 7; z.B. GELFIX 5 oder ADHERE 60 von BASF Agricultural Specialties Ltd., Brasilien); *B. japonicum* TA-11 (TA11 $NOD^+$) (NRRL B-18466; US 5,021,076; Appl. Environ. Microbiol. 56, 2399-2403, 1990; z.B. VAULT® NP, von BASF Corp., USA), *B. japonicum* strains hinterlegt bei der USDA bekannt aus US 7,262,151 und Appl. Environ. Microbiol. 60, 940-94, 1994: USDA 3 1914 isoliert aus *Glycine max* in Virginia (USA), USDA 31 (= Nitragin 61A164) od Serogroup 31 1941 isoliert aus *Glycine max* in Wisconsin (USA), USDA 76 isoliert aus einer Pflanzenpassage des Stamms USDA 74 (Serogroup 76) welcher 1956 aus *G. maxin* California (USA) isoliert wurde, USDA 110 (= IITA 2121, SEMIA 5032, RCR 3427, ARS I-110 und Nitragin 61A89; Serogroup 110) 1959 isoliert aus *G. max* in Florida, USDA 121 1965 isoliert aus *G. max* in Ohio (USA) (Crop Science 26(5), 911-916, 1986); *B. japonicum* WB74 (z.B. Eco-Rhiz Soya aus Plant Health Products (Pty) Ltd, Südafrika; oder Sojabohneninoculant aus Stimuplant CC, Südafrika), *B. lupini* LL13 isoliert aus *Lupinus iuteus* Knöllchen aus französischen Böden (hinterlegt bei der INRA, Frankreich; http://agriculture.gouv.fr/IMG/pdf/ch20060216.pdf), *B. lupini* Stämme aus Australien und bekannt aus Palta J.A., Berger J.B. (eds), Proceed. 12th International Lupin Conference, 14-18 Sept. 2008, Fremantle, Western Australia, International Lupin Association, Canterbury, New Zealand, 47-50, http://www.lupins. org/pdf/conference/2008/Agronomy%20and%20Production/John%20Howieson%20and%20G%20OHara.pdf; Appl. Environ. Microbiol. 71, 7041-7052, 2005; Australian J. Exp. Agricult. 36(1), 63-70, 1996: die Stämme WU425 isoliert in Esperance, Western Australia aus einer nicht-australischen Hülsenfrucht *Ornithopus compressus,* WSM471 isoliert aus *Ornithopus pinnatus* in Oyster Harbour, Western Australia, und WSM4024 isoliert aus Lupinen in Australien durch die CRS während einer Untersuchung 2005; *Burkholderia sp.* A396 (NRRL B-50319; WO 2013/032693; Marrone Bio Innovations, Inc., USA), *Candida oleophila* I-182 (NRRL Y-18846; Phytoparasitica 23(3), 231-234, 1995; z.B. Aspire® von Ecogen Inc., USA;), *C. oleophila* strain O (NRRL Y-2317; Biological Control 51, 403-408, 2009), *Candida saitoana* (z.B. Biocure® [im Gemisch mit Lysozym]

und BioCoat® von Micro Flo Company, USA (BASF SE) und Arysta), Chitosan (z.B. Armour-Zen® von BotriZen Ltd., NZ), *Clonostachys roseaf. catenulate* (auch bezeichnet als *Gliocladium catenulatum*) J1446 isoliert aus finnischer Erde (NJF seminar No 389: Pest, disease and weed management in strawberry; Finland 8-9. Nov. 2006 in NJF Report 2(10), 15-15, 2006; DSM 9212; z.B. Primastop® oder Prestop® von Verdera Oy, Finnland), *Chromobacterium subtsugae* PRAA4-1 isoliert aus Erde, die unter einer östlicher Hemlocktanne (*Tsuga canadensis)* in der Catoctin Mountain Region Zentralmarylands genommen wurde und (NRRL B-30655; z.B. Grandevo® von Marrone Bio Innovations, USA), *Coniothyrium minitans* CON/M/91-08 (WO 1996/021358; DSM 9660; z.B. Contans® WG, Intercept® WG von Prophyta Biologischer Pflanzenschutz GmbH, Deutschland), *Cryphonectria parasitica* (hypovirulente Stämme; Microbiol. Reviews 56(4), 561-576, 1992; z.B. das Produkt Endothia parasitica aus CNICM, France), *Cryptococcus albidus* (z.B. YIELD PLUS® von Anchor Bio-Technologies, Südafrika), *Cryptophlebia leucotreta* granulovirus (CrleGV) (z.B. CRYPTEX von Adermatt Biocontrol, Switzerland), *Cydia pomonella* granulovirus (CpGV) V03 (DSM GV-0006; z.B. Madex® Max von Andermatt Biocontrol, Switzerland), CpGV V22 (DSM GV-0014; z.B. Madex® Twin von Adermatt Biocontrol, Schweiz), *Delftia acidovorans* RAY209 (ATCC PTA-4249;
WO 2003/57861; z.B. BioBoost® aus Brett Young, Winnipeg, Kanada), *Dilophosphora alopecuri* (FarmNote 396, Feb. 2010, Department of Agriculture and Food, Government of Western Australia; z.B. Twist Fungus von BASF Agricultural Specialties Pty Ltd, Australia), *Ecklonia maxima* (kelp) Extract (J. Ecological Engineering 14(1), 48-52, 2013; z.B. KELPAK SL von Kelp Products Ltd, Südafrika), *Flavobacterium sp.* H492 (ATCC B-505584; WO 2013/138398; z.B. MBI-302 von Marrone Bio Innovations, USA für die Bekämpfung hinsichtlich soyean cyst nematode), Formononetin (US 5,002,603; z.B. Myconate® von Plant Health Care plc, U.K.), *Fusarium oxysporum* Fo47 (nicht-pathogener Stamm isoliert aus einem suppressiven Boden bei Châteaurenard, Frankreich; Appl. Environ. Microbiol 68(8), 4044-4060, 2002; Fusaclean® von Natural Plant Protection, N.P.P. (Societe Anonyme) Route d'Artix F-64150 Nogueres, Frankreich), *F. oxysporum* 251/2RB (Prevention Today Vol. 2, n. 1-2, 47-62, 2006; z.B. Biofox® C von S.I.A.P.A., Italien); *Glomus intraradices* (z.B. Myc® 4000 von ITHEC, Frankreich), *Glomus intraradices* RTI-801 (z.B. MYKOS von Xtreme Gardening, USA oder RTI Reforestation Technologies International; USA), Grapefruitsamen und -fruchtfleischextrakt (z.B. BC-1000 von Chemie S.A., Chile), Harpin (alpha-beta) Protein (Science 257, 85-88, 1992; z.B. Messenger™ oder HARP-N-Tek von Plant Health Care plc, U.K.), *Helicoverpa armigera* nucleopolyhedrovirus (HearNPV) (J. Invertebrate Pathol. 107, 112-126, 2011; z.B. Helicovex® von Adermatt Biocontrol, Schweiz), *Heterorhabditis bacteriophora* (z.B. Nemasys® G von BASF Agricultural Specialities Limited, UK), *Isaria fumosorosea Apopka*-97 (ATCC 20874; Biocontrol Science Technol. 22(7), 747-761, 2012; z.B. PFR-97™ oder PreFeRal® von Certis LLC, USA), *I. fumosorosea* FE 9901 (ARSEF 4490; Biocontrol Science Technol. 22(7), 747-761, 2012; z.B. Blastosporen in NoFly™ WP von Natural Industries, Inc., Houston, TX, USA oder von Novozymes, U.S.A.), cis-Jasmon (US 6,890,525; US 8,221,736; Plant Bioscience Limited, Norwich, U.K.), Laminarin (z.B. in Vacciplant® from Laboratoires Goemar, St. Malo, Frankreich oder Stähler SA, Schweiz), *Lecanicillium longisporum* KV42 und KV71 (z.B. Vertalec® von Koppert BV, Niederlande), *L. muscarium* Ve6 (auch bezeichnet als KV01; IMI 19-79, CABI 268317, CBS 102071, ARSEF 5128; z.B. Mycotal® von Koppert BV, Niederlande), *Lysobacter antibioticus* 13-1 (Biological Control 45, 288-296, 2008), *L. antibioticus* HS124 (Curr. Microbiol. 59(6), 608-615, 2009), *L. enzymogenes* 3.1T8 (Microbiol. Res. 158, 107-115, 2003; Biological Control 31(2), 145-154, 2004); *Mesorhizobium* spp. Stämme bekannt aus Soil Biol. Biochem. 36(8), 1309-1317, 2004; Plant and Soil 348(1-2), 231-243, 2011: *M.* sp. WSM1271 gesammelt in Sardinien, Italien, aus dem Pflanzenwirt *Biserrulapelecinus, M.* sp. WSM 1497 gesammelt auf Mykonos, Griechenland, von *Biserrula pelecinus, Mesorhizobium ciceri*CC1192 gesammelt in Israel von Cicer arietinum Knöllchen (UPM 848, CECT 5549; Can. J. Microbiol. 48, 279-284, 2002; von Horticultural Research Station, Gosford, Australien), *M. huakuii* HN3015 isoliert von *Astralagus sinicus* in einem Reisfeld in Südchina (World J. Microbiol. Biotechn. 23(6), 845-851, 2007, ISSN 0959-3993), *M. loti* CC829 isoliert von *L. ulginosus Knöllchen* in den USA (NZP 2012; kommerzieller Impfstoff für *Lotus pedunculatus* und *L. ulginosus* in Australien), und *M. loti* SU343 isoliert von Wirtsknöllchen in den USA (kommerzieller Inoculant für *Lotus corniculatus* in Australien); *Metarhizium anisopliae* FI-1045 (AGAL V10/0104285; WO 2012/018266; z.B. Biocane® von BASF Agricultural Specialties Pty Ltd, Australien), *M. anisopliae* var. *anisopliae* F52 auch genannt 275 oder V275 (DSM 3884, ATCC 90448; z.B. Met52® Novozymes Biologicals BioAg Group, Kanada), *M. anisopliae* ICIPE 69 isoliert aus einer Bodenprobe, die aus der Demokratischen Republik Kongo (DRC) stammt und 1990 unter Verwendung der Galleria bait Methode erhalten wurde (z.B. Metathripol von ICIPE, Nairobe, Kenia), *M. anisopliaevar. acridum* IMI 330189 isoliert von *Ornithacris cavroisi* im Niger (NRRL 50758; z.B. Green Muscle® von BASF Agricultural Specialities (Pty) Ltd., Südafrika), *M. a.* var. *acridum* FI-985 1979 isoliert aus einer Wanderheuschrecke, Austracris guttulosa (Walker), in der Nähe von Rockhampton, Queensland, Australia, (ARSEF 324; Memoirs of the Entomological Society of Canada 171, 287-300, 1997; z.B. Green Guard® SC von BASF Agricultural Specialties Pty Ltd, Australien), *Metschnikowia fructicola* 277 isoliert von der Oberfläche von Weinbeeren (cv. Superior), die in der Zentralregion von Israel kultiviert wurden (US 6,994,849; NRRL Y-30752; z.B. Shemer® von Agrogreen, Israel, mittlerweile vertrieben von Bayer CropSciences, Deutschland), *Microdochium dimerum* L13 (CNCM I-3141; z.B. Antibot® von Agrauxine, Frankreich), *Microsphaeropsis ochracea* P130A 1993 isoliert aus Apfelblättern eines verlassenen Obstgartens, St-Joseph-du-Lac, Quebec, Kanada (ATCC 74412; Mycologia 94(2), 297-301, 2002), *Muscodor albus* QST 20799 auch bezeichnet als 620 ursprünglich isoliert aus der Rinde eines Zimtbaums in Honduras

(NRRL 30547; z.B. Muscudor™ oder QRD300 von AgraQuest, USA), *Muscodor albus* SA-13 (NRRL B-50774; US 2014/0086879 A1; z.B. MBI-601-EP von Marrone BioInnovations, Inc., USA), Neemöl (z.B. Trilogy®, Triact® 70 EC von Certis LLC, USA), *Nomuraea rileyi* Stämme SA86101, GU87401, SR86151, CG128 und VA9101 (Braz. Arch. Biol. Technol. 46(1), 13-19, 2003; WO 2013/110594), *Paecilomyces lilacinus* 251 isoliert aus infizierten Nematodeneiern auf den Philippinen (AGAL 89/030550; WO1991/02051; Crop Protection 27, 352-361, 2008; z.B. Bio-Act®/MeloCon® von Prophyta, Deutschland), *P. lilacinus* DSM 15169 (z.B. Nemata® SC von Live Systems Technology S.A., Kolumbien), *P. lilacinus* BCP2 (NRRL 50756; Acta agriculturae Slovenica, 101 - 2, 263-275, 2013; z.B. PL Gold von BASF Agricultural Specialities (Pty) Ltd., Südafrika), *Paenibacillus alvei* NAS6G6 (WO 2014/029697; NRRL B-50755; z.B. BAC-UP von BASF Agricultural Specialities (Pty) Ltd., Südafrika im Gemisch mit *Bacillus pumilus* KFP9F), *P. polymyxa* PKB1 (ATCC 202127; Can. J. Microbiol. 48(2), 159-169, 2002), *Pantoea agglomerans* E325 (NRRL B-21856; Phytopathol. 101(10), 1234-41, 2011; Trees 26, 227-238, 2012; Bloomtime Biological™ von Northwest Agricultural Products, Inc., USA), *Pantoea vagans* (früher *agglomerans*) C9-1 1994 ursprünglich isoliert aus Apfel Stammgewebe für die Beämpfung des Feuerbrand in Apfel (J. Bacteriol. 192(24), 6486-6487, 2010; z.B. BlightBan C9-1® von NuFrams America Inc., USA), *Pasteuria* sp. ATCC PTA-9643 (WO 2010/085795), *Pasteuria* sp. Ph3 isoliert aus Rasengrassbodenproben, die am DeBary Golfplatz in Zentralflorida gesammelt wurde (ATCC SD-5832; WO 2012/064527; zur Bekämpfung der Nematode *Hoplolaimus galeatusvon* Pasteuria Bioscience, Inc. mittlerweile Syngenta Crop Protection, LLC, USA), *Pasteuria* sp. Pr3 isoliert aus Bodenproben, die im Südosten der USA gesammelt wurden (ATCC SD-5834; zur Bekämpfung der Nematode *Rotylenchulus reniformis* potentiell von der Spezies *P. ramosa*; Naviva® ST von Syngenta Crop Protection, LLC, USA), *P. nishizawae* (WO 2010/80619), *P. nishizawae* Pn1 (Federal Register 76(22), 5808, 2. Februar, 2011; ATCC SD-5833; z.B. Clariva™ PN von Syngenta Crop Protection, LLC, USA), *P. penetrans* (US 5,248,500; Del Monte Corp.), *P. ramosa* (WO 2010/080619), *P. thornea* (WO 2010/080619), *P. usgae* BL1 (ATCC SD-5835; J. Nematol. 42(2): 87-90, 2010; *ibid* 43(2), 101-109, 2011; z.B. Econem™ zur Bekämpfung von *Belonolaimus longicaudatus* von Pasteuria BioScience jetzt Syngenta verkauft durch Harell's LLC, Florida, USA zur Verwendung auf Rasen zur Bekämpfung von *Belonolaimus longicaudatus*), *Penicillium bilaiae* (auch bezeichnet als *P. bilaii*) Stämme ATCC 18309 (= ATCC 74319), ATCC 20851 und/orATCC 22348 (= ATCC 74318) ursprünglich isoliert aus dem Boden im südlichen Alberta (Fertilizer Res. 39, 97-103, 1994; Can. J. Plant Sci. 78(1), 91-102, 1998; US 5,026,417, WO 1995/017806; z.B. Jump Start®, Provide® von Novozymes Biologicals BioAg Group, Kanada), *P. bilaiae* NRRL 50162 und NRRL 50169 (WO 2010/037228), *Phlebiopsis gigantea* (z.B. RotStop® von Verdera Oy, Finnland), *Pichia anomala* WRL-076 (NRRL Y-30842; US 8,206,972), Kaliumbicarbonat (z.B. Amicarb® von Stähler SA, Schweiz), Kaliumsilicat (z.B. Sil-MATRIX™ von Certis LLC, USA), *Pseudozyma flocculosa* PF-A22 UL (z.B. Sporodex® L von Plant Products Co. Ltd., Kanada), *Pseudomonas* sp. Proradix (DSM 13134; WO 2001/40441, z.B. PRORADIX von Sourcon Padena GmbH & Co. KG, Hechinger Str. 262, 72072 Tübingen, Deutschland), *P. chloraphis* MA 342 (Microbiology Monographs 18, 21-43, 2011; z.B. Cerall® oder Cedemon® von BioAgri AB, Uppsala, Schweden oder Intrachem Bio Deutschland GmbH & Co. KG, Bad Camberg, Deutschland), *P. fluorescens* (z.B. in Bio Cure-B von T. Stanes & Company Limited, Indien; oder in Blight-End von Agri Naturals, Mumbai, Indien), *P. fluorescens* A506 (Phytopathol 97(2), 244-249, 2007; ATCC 31948; z.B. BlightBan® von NuFarm Americas, Inc., Morrisville, NC, USA), *P. fluorescens* ATCC 13525 von biovar I = biotype A; ursprünglich isoliert aus Vorfiltertanks in England (DSM 50090; registriert für den Einsatz in Kanada), *P. fluorescens* CHA0 (Mol. Plant Microbe Interact. 5(1), 4-13, 1992), *P. fluorescens* CL 145A (J. Invertebr. Pathol. 113(1), 104-14, 2013; z.B. Zequanox® von Marrone BioInnovations, Davis, CA, USA), *P. fluorescens* NCIB 12089 (EP 0210734 A!; Victus® von Mauri Laboratories, 9 Moorebank Ave., Moorebank, NSW 2170, Australien), *P. fluorescens* Pf-5 isoliert von der Wurzeloberfläche von Baumwolle (ATCC BAA-477), *P. putida* ATCC 202153 (EMBRAPA 63/88 4 B; WO 2004/0245865), *Pythium oligandrum* DV 74 (US 2013/0035230; ATCC 38472; z.B. Poyversum® von Remeslo SSRO, Biopreparaty, Czech Rep.und von Gowan, USA), *Reynoutria sachalinensis* Extrakt (EP 0307510 B1; z.B. Regalia® SC von Marrone BioInnovations, Davis, CA, USA oder Milsana® von BioFa AG, Deutschland), *Rhizobium leguminosarum* bv. *phaseoli* (z.B. RHIZO-STICK von BASF Corp., USA), *R. leguminosarum bv. phaseoli* RG-B10 (USDA 9041; aus Int. J. Syst. Bacteriol. 46(1), 240-244, 1996; Int. J. Syst. Evol. Microbiol. 50, 159-170, 2000; z.B. Nodulator® Trockenbohne in Afrika, HiStick NT Trockenbohne in US, und Nodulator® Trockenbohne in Kanada von BASF Corp., USA, oder BASF Agricultural Specialties Ltd., Kanada), *R. l.* bv. *trifolii* CB782 (Nodulaid® Torf für Kenia Weißklee von BASF Agricultural Specialties Pty Ltd, Australien), *R. l.* bv. *trifolii* CC275e (Nodulaid® Torf für NZ Weißklee von BASF Agricultural Specialties Pty Ltd, Australien), *R. l.* bv. *trifolii* CC283b (ICMP 4073b; Proc. New Zealand Grassland Assoc. 56, 101-105, 1994; Microbiol. 153, 3184-3195, 2007; Nodulaid® Torf für Kaukasischen Klee von BASF Agricultural Specialties Pty Ltd, Australien), *R. l.* bv. *trifolii* CC1099 (Inoculating Legumes: A Practical Guide, ed. Grain Research and Development Corporation, 2012, ISBN 978-1-921779-45-9; z.B. Nodulaid® Torf für Esparsette von BASF Agricultural Specialties Pty Ltd, Australien), *R. l.* bv. *trifolii* RP113-7 (Appl. Environ. Microbiol. 44(5), 1096-1101, 1982; z.B. Dormal® von BASF Corp., USA), *R. l.* bv. *trifolii* TA1 (Appl. Environ. Microbiol. 49(1), 127-131, 1985; z.B. Nodulaid® Torf für Weißklee von BASF Agricultural Specialties Pty Ltd, Australien), *R. l.* bv. *trifolii* strain WSM1325 1993 isoliert von der griechischen Insel Serifos (Stand. Genomic Sci. 2(3), 347-356, 2010; Inoculating Legumes: A Practical Guide, ed. Grain Research and Development Corporation,

2012, ISBN 978-1-921779-45-9; Nodulaid® Torf für Weißklee und Nodulator® granules für Erdklee von BASF Agricultural Specialties Pty Ltd, Australien, für ein breites Spektrum von einjährigem Klee mediterranen Ursprungs), *R. l.* bv. *trifolii* Stamm WSM2304 1998 isoliert aus *Trifolium polymorphum* in Uruguay (Stand. Genomic Sci. 2(1), 66-76, 2010), *R. l.* bv. *viciae* P1NP3Cst ein Streptomycin-resistenter Mutant von P1NP3C isoliert aus Erbsenwurzelknöllchen in Breteniere, Frankreich (auch bezeichnet als 1435; New Phytol. 176, 680-690, 2007; *ibid.* 179(1), 224-235, 2008; z.B. Nodulator® PL Peat Granule von BASF Corp., USA; oder Nodulator® XL PL von BASF Agricultural Specialties Ltd., Kanada), *R. l.* bv. *viciae* RG-P2 auch bezeichnet als P2 isoliert von Erbsenwurzelknöllchen in Sakatchewan, Kanada (z.B. RhizUP Torf für Erbsen und Linsen in Kanada von BASF Agricultural Specialties Ltd., Kanada), *R. l.* bv. *viciae* SU303 (z.B. Nodulaid® Group E von BASF Agricultural Specialties Pty Ltd, Australien), *R. l.* bv. *viciae* WSM1455 (z.B. Nodulaid® Group F von BASF Agricultural Specialties Pty Ltd, Australien), *R. tropiciCC511* (Agronomy, N.Z. 36, 4-35, 2006; z.B. Nodulaid® Torf für Gartenbohne von BASF Agricultural Specialties Pty Ltd, Australien)*R. tropici* CIAT 899 isoliert in Kolumbien (SEMIA 4077; Rev. Ciênc. Agron. 44(4) Fortaleza Oct./Dec. 2013; z.B. Nitrafix® FEIJÄO Torf für Bohnen von BASF Agricultural Specialties Ltd., Brasilien in Mischung mit Stamm SEMIA 4080), *R. tropici* H12 isoliert in Planaltina, DF, Cerrados, Brasilien (SEMIA 4088; Appl. Microbiol. Biotechnol. 93(5), 2035-49, 2012; z.B. Nitrafix® FEIJÄO von BASF Agricultural Specialties Ltd., Brasilien), *R. tropici* PRF 81 isoliert in Paraná, Brasilien (SEMIA 4080; Soil Biology & Biochemistry 39, 867-876, 2007; BMC Microbiol. 12, 84, 2012; Nitrafix® FEIJÄO Torf für Bohnen von BASF Agricultural Specialties Ltd., Brasilien in Mischung mit Stamm SEMIA 4077), *Sinorhizobium meliloti* RCR2011 auch bezeichnet als 2011 oder SU47 (MSDJ0848; Mol. Gen. Genomics 272, 1-17, 2004; z.B. Dormal® Alfalfa & Luzerne von BASF Corp., USA; Nitragin® Gold von Novozymes Biologicals BioAg Group, Kanada), *Sphaerodes mycoparasitica* SMCD2220 auch bezeichnet als SMCD2220-01 (IDAC 301008-01; WO 2011/022809), *Spodoptera littoralis* nucleopolyhedrovirus (SpliNPV) (z.B. in LITTOVIR von Adermatt Biocontrol, Schweiz), *Steinernema carpocapsae* (z.B. Millenium® von BASF Agricultural Specialities Limited, UK), *S. feltiae* (Nemashield® von BioWorks, Inc., USA; Nemasys® von BASF Agricultural Specialities Limited, UK), *S. kraussei* L137 (Nemasys® L von BASF Agricultural Specialities Limited, UK), *Streptomyces galbus* AQ6047 (NRRL 30232; WO 2012/135763; AgraQuest now Bayer CropScience LP, USA); *S. galbus* M1064 (NRRL 50334; WO 2012/135763; AgraQuest now Bayer CropScience LP, USA); *S. griseoviridis* K61 (Crop Protection 25, 468-475, 2006; z.B. Mycostop® von Verdera Oy, Espoo, Finnland), *S. lydicus* WYEC 108 (US 5,403,584; z.B. Actinovate® von Natural Industries, Inc., USA), *S. violaceusniger* YCED-9 (US 5,968,503; z.B. DT-9® von Natural Industries, Inc., USA), *Talaromyces flavus* V117b isoliert aus Erde (z.B. Protus® WG von Prophyta, Deutschland), *Trichoderma asperellum* SKT-1 isoliert aus der Rhizosphäre von Japanischen Teppichrasengras (FERM P-16510; J. Gen. Plant Pathol. 71(5), 351-356, 2005; z.B. Eco-Hope® von Kumiai Chemical Industry Co., Ltd., Japan), *T. asperellum* ICC 012 isoliert aus dem Boden in Zentralitalien, der erkannt wurde, Pflanzenkrankheiten zu unterdrücken (IMI 392716; z.B. Tenet WP, Remdier WP oder Bioten WP von Isagro NC, USA, Bio-Tam™ von AgraQuest, USA), *T. asperellum* TV1 früher *T. viride* (MUCL 43093; z.B. T. viride TV1 von Agribiotec srl, Italien oder Xedavir von Xeda Italia, Italien), *T. atroviride* LC52 (z.B. Sentinel® von Agrimm Technologies Ltd, NZ), *T. atroviride* CNCM I-1237 (z.B. Esquive® WG von Agrauxine S.A., Frankreich, z.B. gegen Schnittwundenerkrankungen bei Wein und Pflanzenwurzelpathogenen), *T. fertile* JM41R (NRRL 50759; z.B. Trichoplus™ von BASF Agricultural Specialities (Pty) Ltd., Südafrika), *T. gamsii* ICC 080 (IMI 392151; z.B. Tenet WP, Remdier WP, Bioten WP von Isagro NC, USA, Bio-Tam™ von AgraQuest, USA), *T. harzianum* T-22 auch bezeichnet als KRL-AG2 (ATCC 20847; BioControl 57, 687-696, 2012; z.B. Plantshield® von BioWorks Inc., USA oder SabrEx™ von Advanced Biological Marketing Inc., Van Wert, OH, USA), *T. harzianum* T-35 und T-315 (ATCC 20691; EP 0133878 B1; z.B. Root Pro® von Mycontrol Ltd., Israel), *T. harzianum* T-39 (CNCM I-952; EP 0466133 B2; z.B. Trichodex® oder Trichoderma 2000® von Mycontrol Ltd., Israel und Makhteshim Ltd., Israel), Gemisch von *T. harzianum* und *T. viride* (z.B. Trichopel® von Agrimm Technologies Ltd, NZ), Gemisch von *T. harzianum* ICC012 und *T. viride* ICC080 (z.B. Remdier® WP von Isagro Ricerca, Italien), *T. polysporum* IMI 206039 (ATCC 20476; z.B. Binab® von BINAB Bio-Innovation AB, Schweden im Gemisch mit *T. atroviride* IMI 206040), *T. stromaticum* (z.B. Tricovab® von C.E.P.L.A.C., Brasilien), *T. virens* GI-3 auch bezeichnet als G1-3 oder GL-3 (CA 2471555 A1; ATCC 58678; z.B. QuickRoots™ von TJ Technologies, Watertown, SD, USA im Gemisch mit *B. amyloliquefaciens* TJ1000), *T. virens* GL-21 auch bezeichnet als G1-21 isoliert aus einem Sklerotium von *Sclerotinia minor* (US 7,429,477; z.B. Soilguard® 12G von Certis LLC, USA; EPA Registration Number: 70051-3 und EPA Establishment Number: 067250-IL-001), *T. virensG-41* auch bezeichnet als 041, #41X oder ABM 127 isoliert aus Bodenproben entnommen von *Aphanomyces*-suppressiven Bohnefeldern in Livingston County, New York (ATCC 20906; US 4,996,157; z.B. Rootshield® PLUS von BioWorks, Inc., USA), *T. viride* (J. Biological Control 23(1), 31-36, 2009; z.B. Trieco® von Ecosense Labs. (Indien) Pvt. Ltd., Indien; oder Bio-Cure® F von T. Stanes & Co. Ltd., Indien), und *Ulocladium oudemansii* HRU3 (Agronomy 3, 632-647, 2013; z.B. Botry-Zen® von Botry-Zen Ltd, NZ).

Die entsprechenden Stämme sind aus Kultursammlungen und von den entsprechenden den Hinterlegungsstellen zugänglich (nachfolgend mit Abkürzung aufgeführt: http://www.wfcc.info/ccinfo/collection/by_acronym/) wie die Stämme mit den Abkürzungen AGAL oder NMI von: National Measurement Institute, 1/153 Bertie Street, Port Melbourne, Victoria, Australien 3207; ATCC: American Type Culture Collection, 10801 University Blvd., Manassas, VA 20110-2209, USA; BR: Embrapa Agrobiology Diazothrophic Microbial Culture Collection, P.O.Box 74.505, Seropedica, Rio de Janeiro,

23.851-970, Brasilien; CABI or IMI: CABI Europe - International Mycological Institute, Bakeham Lane, Egham, Surrey, TW20 9TYNRRL, UK; CB: The CB Rhizobium Collection, School of Environment and Agriculture, University of Western Sydney, Hawkesbury, Locked Bag 1797, South Penrith Distribution Centre, NSW 1797, Australien; CBS: Centraalbureau voor Schimmelcultures, Fungal Biodiversity Centre, Uppsalaan 8, PO Box 85167, 3508 AD Utrecht, Niederlande; CC: Division of Plant Industry, CSIRO, Canberra, Australien; CNCM: Collection Nationale de Cultures de Microorganismes, Institute Pasteur, 25 rue du Docteur Roux, F-75724 PARIS Cedex 15; CPAC: Embrapa-Cerrados, CX.Postal 08223,Planaltina,DF,73301-970, Brasilien; DSM: Leibniz-Institut DSMZ-Deutsche Sammlung von Mikroorganismen und Zellkulturen GmbH, Inhoffenstraße 7 B, 38124 Braunschweig, Deutschland; IDAC: International Depositary Authority of Canada Collection, Kanada; ICMP: Interntional Collection of Microorganisms from Plants, Landcare Research, Private Bag 92170, Auckland Mail Centre, Auckland 1142, Neuseeland; IITA: IITA, PMB 5320, Ibadan, Nigeria; INTA: Agriculture Collection Laboratory of the Instituto de Microbiologia y Zoologia Agricola (IMYZA), Instituto Nacional de Tecnologia Agropecuaria (INTA), Castelar, Argentinien; MSDJ: Laboratoire de Microbiologie des Sols, INRA, Dijon, Frankreich; MUCL: Mycotheque de l'Universite catholique de Louvain, Croix du Sud 2, box L7.05.06, 1348 Louvain-la-Neuve, Belgien; NCIMB or NICB: The National Collections of Industrial and Marine Bacteria Ltd., Torry Research Station, P.O. Box 31, 135 Abbey Road, Aberdeen, AB9 8DG, Schottland; Nitragin: Nitragin strain collection, The Nitragin Company, Milwaukee, Wisconsin, USA, NRRL or ARSEF (Sammlung der entomopathogenen Pilze): ARS Culture Collection of the National Center for Agricultural Utilization Research, Agricultural Research Service, U.S. Department of Agriculture, 1815 North University Street, Peoria, Illinois 61604, USA; NZP: Department of Scientific and Industrial Research Culture Collection, Applied Biochemistry Division, Palmerston North, Neuseeland; PPRI: ARC-Plant Protection Research Institute, Private Bag X134, Queenswood Pretoria, Gauteng, 0121, Südafrika; SEMIA: FEPAGRO-Fundação Estadual de Pesquisa Agropecuária, Rua Gonçalves Dias, 570, Bairro Menino Deus, Porto Alegre/RS, Brasilien; SRDI: SARDI, Adelaide, South Australia; USDA: U.S. Department of Agriculture, Agricultural Research Service, Soybean and Alfalfa Research Laboratory, BARC-West, 10300 Baltimore Boulevard, Building 011, Beltsville, MD 20705, USA (Beltsville Rhiz. Cult. Catalog: http://pdf.usaid.gov/ pdf_docs/PNAAW891.pdf); and WSM: Murdoch University, Perth, Western Australia.Weitere Stämme sind zu finden unter: http://gcm.wfcc.info/; http://www.landcareresearch.co.nz/resources/ collections/ icmp.

Jasmonsäure, ihre Salze (Jasmonate) oder Derivate schließlich ohne weitere Limitierung Kalium, Natrium, Lithium, Ammonium, Dimethylammonium, Isopropylammonium, Diolammonium und Ditriethanolammonium Jasmonate ein; also auch Jasmonsäuremethylester, Jasmonsäureamid, Jasmonsäuremethylamid, Jasmonsäure-L-Aminosäure (Amid-verbundene) Konjugate (z.B. Konjugate mit L-Isoleucin, L-Valin, L-Leucin, oder L-Phenylalanin), 12-Oxo-Phytodiensäure, Coronatin, Coronalon, Coronafacoyl-L-Serin, Coronafacoyl-L-Threonin, Methylester von 1-Oxo-Indanoyl-Isoleucin, Methylester von 1-Oxo-Indanoyl-Leucin, cis-Jasmon, Linolsäure oder Derivate davon, und Kombinationen davon.

Humate sind Huminsäuren und Fulvinsäuren extrahiert aus einer Form der Braunkohle und Ton bekannt als Leonardit. Huminsäuren sind organische Säuren die in Humus und anderen davon abgeleiteten Materialien vorkommen wie Torf und bestimmter Steinkohle. Sie wurden nachgewiesen, die Düngereffizienz hinsichtlich von Phosphaten und der Mikronährstoffaufnahme durch Pflanzen zu erhöhen und bei der Entwicklung des Pflanzenwurzelsystems beizutragen. Ein weiteres Pestizid gemäß der vorliegenden Erfindung stellt Netzschwefel dar.

Die vorstehenden Pestizide und deren Kombinationen stellen bevorzugte organische Materialien dar, die als erfindungsgemäße Teilchen mit einem nicht-ampholytischen, quaternierbaren und bei 20°C wasserlöslichen Polymer gemäß der vorliegenden Erfindung behandelt, z.B. beschichtet, werden können. Alternativ kann auch Saatgut behandelt werden.

Die daraus zugänglichen, beschichteten Teilchen können beispielsweise als Pulver oder Granulate gelagert bzw. weiterverwendet werden, vorzugsweise können die beschichteten Teilchen in wässriger Suspension (Dispersion) gelagert bzw. ausgebracht werden. Aufgrund der Beschichtung der Teilchen und der daraus resultierenden Umlagerung der Oberflächenladung können die entsprechenden Teilchen als Dispersionen bzw. Suspensionen mit höherer Konzentration und Stabilität und in geringerer Partikelgröße aufbewahrt bzw. benutzt werden. Der Grund dafür ist die deutlich verringerte Neigung der Teilchen zur Agglomeration.

Ein großer Vorteil im Pflanzenschutz resultiert auch für die beschichteten Teilchen gemäß der hier vorliegenden Erfindung vor allem in der gleichmäßigeren Ausbringung der Teilchen insbesondere beim Versprühen, wobei darüber hinaus auch aufgrund der besseren Haftung der beschichteten Teilchen auf den behandelten Pflanzen, dem entsprechenden Saatgut und/oder den landwirtschaftlichen Flächen eine nachhaltigere Behandlung der Pflanzen bzw. Flächen mit dem entsprechenden Pestizid erfolgt.

Beispielsweise kann die Ausbringung durch Sprühen der beschichteten Pestizide, vorzugsweise in wässriger Dispersion über die entsprechenden Pflanzen oder landwirtschaftlich relevanten Anbauflächen wie beispielsweise Felder, Gärten, Weinberge, Ackerflächen, Wälder, Rasenflächen, etc., erfolgen.

Die beschichteten Teilchen haben aufgrund ihrer höheren Stabilität in wässrigen Dispersionen bzw. Suspensionen der Vorteil, dass zur Stabilisierung auf die Zugabe von Emulgatoren, Tensiden, Lösungsvermittlern und vergleichbaren Hilfsstoffen entweder verzichtet werden kann oder zumindest nur geringere Mengen davon verwendet

werden müssen.

Die erfindungsgemäßen Teilchen eignen sich daher insbesondere im Bereich des Pflanzenschutzes für die umweltverträgliche Ausbringung in der Natur auf den entsprechenden Pflanzen, dem entsprechenden Saatgut bzw. den jeweiligen Anbauflächen.

Die erfindungsgemäßen Teilchen weisen außerdem auch eine bessere Regenbeständigkeit auf, da beispielsweise die beschichteten Teilchen, vorzugsweise Pestizide, aufgrund der besseren Haftung langsamer von Pflanzen und Anbauflächen abgewaschen werden.

Gleichmäßigere Ausbringung sowie bessere und längere Haftung der Teilchen bedeuten im landwirtschaftlichen Anbau bzw. im Pflanzenschutz eine längere, nachhaltigere und breitere Wirkung der eingesetzten Pestizide sowie insbesondere auch die Möglichkeit geringere Mengen an Pestiziden einzusetzen, ohne dass die daraus resultierende Wirkung geringer wird.

**Beispiele**

1. Herstellung von Teilchen mit modifizierter Oberfläche

Es wurden 10g Lupasol® WF (BASF SE) in 300 g Wasser vollständig gelöst. Dazu wurden 10 g Diamant-Teilchen langsam hinzugegeben. Die entstandene Suspension wurde 3h bei Raumtemperatur bei 800 U/min unter Verwendung eines Stabrührers oder Magnetrührers gerührt. Anschließend ließ man die Diamantteilchen sich in der Suspension langsam absetzen und die überstehende Lösung wurde vorsichtig abdekantiert. Die restliche Suspension wurde mit einer Filternutsche filtriert. Der Filterkuchen wurde solange mit Wasser gewaschen bis das Filtrat einen neutralen pH-Wert aufwies. Vorzugsweise wurde im hier vorliegenden Test der Filterkucken noch bei 70°C und 100 mbar, bzw. alternativ bei 2 mbar, 5h lang getrocknet.

2. Anwendungstechnische Untersuchungen

Zeta-Potential-Messung

Die Bestimmung des Zeta-Potentials der wässrigen Suspensionen von Deltamethrin-, und Azoxystrobin-Pulvern, die alle in Analogie des obigen Beispiels hergestellt wurden, erfolgte wie folgt. Die Messung erfolgte mit einem Messgerät des Typs Coulter DELSA 440 SX. Man erkennt, dass die unbehandelten Teilchen eine negative Oberflächenladung aufweisen, wohingegen die erfindungsgemäß behandelten Teilchen umgeladen worden sind und eine positive Ladung aufweisen. Diese Umladung der ursprünglichen Oberflächenladung konnte durch die nachfolgenden experimentellen Messungen für die erfindungsgemäßen Teilchen nachgewiesen werden.

| Test | Teilchen ($d_{50}$) [μm] | Hersteller | Polymer für Beschichtung | pH | Zeta-Potential [mV] |
|---|---|---|---|---|---|
| CE7 | Deltamethrin; 90 μm | Interchim | - | 4 | -32 |
| IE7 | Deltamethrin; 90 μm | Interchim | Lupasol® WF | 4 | +56 |
| CE8 | Azoxystrobin; 220 μm | Helm AG | - | 4 | -36 |
| IE8 | Azoxystrobin; 220 μm | Helm AG | Lupasol® WF | 4 | +44 |
| Lupasol® WF (BASF SE): Nicht-ampholytisches, quaternierbares Polyethylenimin, $M_w$ (light scattering) 25000, viscosity (20°C; mPas, ISO 2555, Brookfield) 200000. | | | | | |

3. Herstellung von mit Polyethylenimin (PEI) behandelten Pflanzenschutzformulierungen

Die Beispielformulierungen 5 - 19 aus der nachfolgenden Tabelle 1 wurden in einem Disperser der Fa. LAU, Mod. DAS H [/A] 200-K, 120 min geschüttelt.
Die Suspensionskonzentrate (SCs) setzten sich wie folgt zusammen (Gew.-%):

| | |
|---|---|
| AI (Wirkstoff) | 25% |
| Dispergator | 2,5% |
| PEI | 0,25 - 2,5% |
| Wasser ention. (pH = 9) | add. to 100% |

Gegebenenfalls wurden 0,2% Entschäumer (Agnique® ST 2434) zugegeben.
40g des jeweiligen SC wurden dann mit 80g Glaskugeln (d = 3 mm) in einer 100 ml - Teflonflasche im LAU-Disperser über 90 min (150 min für Boscalid) bei Kühlung St. 2 vermahlen und die Kugeln anschließend sofort abgesiebt.
Nach 24h wurden die Partikelgrößenverteilung am Malvern Mastersizer 3000 bestimmt.

Die zugehörigen Zeta-Potenzial Werte sind in der nachfolgenden Tabelle 1 aufgeführt. Sie belegen die Umkehrung der Ladung der mit PEI behandelten Partikel und Formulierungen.

Bei den Beispielen 1-4 handelt es sich um handelsübliche Suspensionskonzentrate, die analog zu Beispiel 5-19 behandelt wurden.

Tabelle 1

| Bsp. | SC/Wirkstoff | Hersteller | Teilchengröße (d50) [pm] | Dispergator | Polymer für Beschichtung | Polymer bez. auf Wirkstoff [Gew.-%] | Zeta-Potential (pH=4) [mV] |
|---|---|---|---|---|---|---|---|
| 1 | Cantus Gold® | BASF | 2.0 | | - | - | -51 |
| 2 | Cantus Gold® | BASF | 2.0 | | Lupasol® WF | 10 | 46 |
| 3 | Ortiva® | Syngenta | 2.0 | | - | - | -52 |
| 4 | Ortiva® | Syngenta | 2.0 | | Lupasol® WF | 10 | 49 |
| 5 | Tebuconazol | | 2.2 | Pluronic® PE 10500 | - | - | -35 |
| 6 | Tebuconazol | | 2.2 | Pluronic® PE 10500 | Lupasol® WF | 10 | 23 |
| 7 | Chlorothalonil | | 1.3 | Pluronic® PE 10500 | - | - | -32 |
| 8 | Chlorothalonil | | 1.3 | Pluronic® PE 10500 | Lupasol® FG | 10 | 34 |
| 9 | Chlorothalonil | | 1.3 | Pluronic® PE 10500 | Lupasol® G100 | 10 | 43 |
| 10 | Chlorothalonil | | 1.3 | Pluronic® PE 10500 | Lupasol® WF | 10 | 45 |
| 11 | Chlorothalonil | | 1.3 | Pluronic® PE 10500 | Lupasol® PS | 10 | 44 |
| 12 | Azoxystrobin | | 1.7 | Pluronic® PE 10500/Tamol® NN8906 | - | - | -52 |
| 13 | Azoxystrobin | | 1.7 | Pluronic® PE 10500/Tamol® NN8906 | Lupasol® WF | 1 | -49 |
| 14 | Azoxystrobin | | 1.7 | Pluronic® PE 10500/Tamol® NN8906 | Lupasol® WF | 4 | 23 |
| 15 | Azoxystrobin | | 1.7 | Pluronic® PE 10500/Tamol® NN8906 | Lupasol® WF | 7 | 43 |
| 16 | Boscalid | | 2.1 | Pluronic® PE 10500 | - | - | -22 |
| 17 | Boscalid | | 2.1 | Pluronic® PE 10500 | Lupasol® WF | 1 | 8 |
| 18 | Boscalid | | 2.1 | Pluronic® PE 10500 | Lupasol® WF | 4 | 14 |
| 19 | Boscalid | | 2.1 | Pluronic® PE 10500 | Lupasol® WF | 7 | 14 |

4. Analyse der Regenbeständigkeit

Zur Bestimmung der Regenbeständigkeit wurden die in der nachfolgenden Tabelle 2 aufgeführten Beispiele nach der unten angegebenen Vorschrift geprüft:

Tabelle 2

| Bsp. | SC / Wirkstoff | Wirkstoffgehalt [Gew.-%] | Polymer für Beschichtung | Polymer bez. auf Wirkstoff [Gew.-%] | Eintauchzeit [min] | Rainfastness; Rückstand (MW) [%] |
|---|---|---|---|---|---|---|
| 3 | Ortiva® | 10 | - | - | 10 | 23.2 |
| 4 | Ortiva® | 10 | Lupasol® WF | 10 | 10 | 69.7 |
| 7 | Chlorothalonil | 25 | - | - | 5 | 36.2 |
| 8 | Chlorothalonil | 25 | Lupasol® FG | 10 | 5 | 84.4 |
| 9 | Chlorothalonil | 25 | Lupasol® G100 | 10 | 5 | 86.5 |
| 10 | Chlorothalonil | 25 | Lupasol® WF | 10 | 5 | 93.1 |
| 11 | Chlorothalonil | 25 | Lupasol® PS | 10 | 5 | 94.2 |

Methode:

Parafilm® - Streifen (Fa. Bemis Flexible Packaging, Neenah, WI 54956, USA) der Abmessung 70 x 90 mm werden mit Klebeband auf Aluminiumblechen befestigt, bis zur Gewichskonstanz bei 45°C/ 250 l/h (< 10% rel.L.) Luftstrom getrocknet, im Exsikkator abgekühlt und tariert (t). Es werden 20 Tropfen der in der vorstehenden Tabelle 2 beschriebenen Beispiele (gesamt: 200µl) im gleichen Abstand auf den Parafilm® aufgetragen, 8h getrocknet, im Exsikkator abgekühlt (s.o.) und gewogen (b1).

Dann werden die Bleche einzeln eine definierte Zeit in ein Wasserbad (pH = 6,4) getaucht, 8h getrocknet, abgekühlt (s.o.) und gewogen (b2).

Die Berechnung des Rückstandes erfolgt nach der Formel:

$$n1 = b1 - t$$

$$n2 = b2 - t$$

$$\text{Rückstand} = n2 \times 100 / n1$$

Es konnte nachgewiesen werden, daß die mit PEI behandelten Proben besser auf dem Parafilm®, der ähnlich hydrophobe Oberflächeneigenschaften wie Pflanzenblätter aufweist, haften.

5. Gleichmäßigkeit der Ausbringung im Treibhausversuch

Zum Nachweis der besseren Verteilung der behandelten Suspensionskonzentrate bei der Ausbringung wurde mit den Beispielen 1-4 ein Treibhausversuch durchgeführt. Die Ergebnisse sind in der nachfolgenden Tabelle 3 zusammengefaßt. Es ergibt sich, daß die mit PEI behandelten Proben eine verbesserte Wirksamkeit bzw. einen geringeren Befall zeigen.

Tabelle 3

| Bsp. | SC / Wirkprinzip | Polymer für Beschichtung | Polymer bez. auf Wirkstoff [Gew.-%] | Dosierung [g/ha] | Pflanze | Pilzkrankheit | Befall (2 WAT, MW) [%] |
|---|---|---|---|---|---|---|---|
| 1 | Cantus Gold® / protectiv | - | - | 0.5 | Raps | alternaria brassicicola | 61.3 |
| 2 | Cantus Gold® / protectiv | Lupasol® WF | 10 | 0.5 | Raps | alternaria brassicicola | 34.8 |
| 3 | Ortiva® / protectiv | - | - | 1.25 | Gerste | blumeria graminis formae speciales hordei (Rasse 6A) | 32.7 |
| 3 | Ortiva® / protectiv | - | - | 2.5 | Gerste | blumeria graminis formae speciales hordei (Rasse 6A) | 24.0 |
| 3 | Ortiva® / protectiv | - | - | 5.0 | Gerste | blumeria graminis formae speciales hordei (Rasse 6A) | 3.7 |
| 4 | Ortiva® / protectiv | Lupasol® WF | 10 | 1.25 | Gerste | blumeria graminis formae speciales hordei (Rasse 6A) | 14.0 |
| 4 | Ortiva® / protectiv | Lupasol® WF | 10 | 2.5 | Gerste | blumeria graminis formae speciales hordei (Rasse 6A) | 10.7 |
| 4 | Ortiva® / protectiv | Lupasol® WF | 10 | 5.0 | Gerste | blumeria graminis formae speciales hordei (Rasse 6A) | 2.7 |

Die Vorgehensweise war dabei wie folgt:

Protektiver Test mit Cantus Gold® gegen *alternaria brassicicola*

Raps (Sorte "Linus") wurde 6 Wochen in Frustorfer Erde (Spezialmischung "fein") kultiviert. Mit dieser Mischung wird ein besonders gleichmäßiger Auflauf der Versuchspflanzen gewährleistet. Die Inokulation der Blätter mit *alternaria brassicicola* erfolgte 4 Stunden nach der Applikation der Versuchspräparate (protektive Anwendung). Für die Inokulation wurden Raps-Blätter gleicher Größe und gleichen Alters entnommen. Auf den Blattgrund dieser Blätter wurde je ein Mycelstück, das mit einem sterilen Korkbohrer aus einer 14 Tage alten Kultur von *Sclerotinia* auf Kartoffeldextrose-Agar entnommen worden war, aufgetragen. Der Versuch wurde als Blattsegmenttest konzipiert, indem die Rapsblätter auf Benzimidazolagar ausgelegt wurden (0,5 % Agar, Zumischung von 40 ppm Benzimidazol nach dem Autoklavieren). Die Inkubationszeit betrug 2 WAT (weeks after treatment). Vier Rapsblätter wurden je Petrischale (Fa. Greiner, quadratische Form, 15 cm Durchmesser) ausgelegt. Für jedes Prüfglied wurden 2 Petrischalen verwendet, so dass pro Prüfglied 8 Blätter ausgewertet werden konnten.

Die Konzentration von Cantus Gold für die Blattapplikation wurde auf Grund eines Vorversuches auf 50 g/ha eingestellt, um sicher zu stellen, dass noch eine suboptimale Wirkung gegeben war, die eine Differenzierung der Wirksamkeit des zur Beschichtung eingesetzten Lupasol® WF ermöglichte. Die Auswertung der Wirkung gegen *alternaria* erfolgte durch Schätzung des Blattbefalls auf einer prozentualen Skala in Zehnerstufen von 0-100 %.

Protektiver Test mit Ortiva® (Wirkstoffgehalt Azoxystrobin ca. 23%) gegen BPM

Gerstenpflanzen (3 Pflanzen/Gefäß) wurden drei Wochen in Frustorfer Erde (Spezialmischung "fein") kultiviert. Mit dieser Mischung wird ein besonders gleichmäßiger Auflauf der Versuchspflanzen gewährleistet. Die Inokulation der

Blätter mit Mehltau erfolgte 4 Stunden nach der Applikation der Versuchspräprarate (protektive Anwendung). Für die Inokulation wurden frische Konidien von *Blumeria graminis* f. sp. *hordei* verwendet (Rasse A6) und im Mehltau-Turm durch Windverteilung auf die Blätter gebracht. Es wurden für einen Blattsegmenttest 10 cm lange Blattsegmente, beginnend von der Halmbasis, abgeschnitten und je 15 Blätter des jüngsten sowie zweitjüngsten Blattes auf Benzimidazolagar ausgelegt (0,5 % Agar, Zumischung von 40 ppm Benzimidazol nach dem Autoklavieren).

Die Konzentration von Azoxystrobin für die Blattapplikation wurde auf 5 g/ha eingestellt. Die Auswertung der Mehltauwirkung erfolgte durch Auszählung der Mehltaupusteln pro Blatt auf 7 cm Blattlänge. Die Bonitierung erfolgte nach 2 WAT.

## Patentansprüche

1. Organische Pestizid-Teilchen, dadurch charakterisiert, dass die Teilchen an der Oberfläche mit einem nicht-ampholytischen, quaternierbaren und bei 20 °C wasserlöslichen Polymer beschichtet sind, wobei das Polymer ausgewählt ist aus der Gruppe der Polymere bestehend aus Polyethylenimine, Polypropylenimine, sowie Mischungen dieser Polymere.

2. Teilchen nach Anspruch 1, wobei die Teilchen einen Durchmesser zwischen 10 und 0,00001 mm aufweisen.

3. Verwendung von Teilchen nach Anspruch 1 oder 2 in organischen Lösungsmitteln, in Pflanzenschutzformulierungen, zur Behandlung von Saatgut, oder zur Behandlung von Pestiziden.

## Claims

1. An organic pesticide particle, wherein the particles are coated on the surface with a non-ampholytic polymer that can be quaternized and is water-soluble at 20°C, wherein the polymer is selected from the group of polymers consisting of polyethyleneimines, polypropyleneimines, and mixtures of these polymers.

2. The particle according to claim 1, wherein the particles have a diameter between 10 and 0.00001 mm.

3. The use of particles according to claim 1 or 2 in organic solvents, in plant protection formulations, for treating seed, or for treating pesticides.

## Revendications

1. Particules organiques de pesticide, **caractérisées en ce que** les particules sont revêtues sur la surface avec un polymère non ampholytique, quaternisable et soluble dans l'eau à 20 °C, le polymère étant choisi dans le groupe de polymères constitué par les polyéthylène-imines, les polypropylène-imines, ainsi que les mélanges de ces polymères.

2. Particules selon la revendication 1, les particules présentant un diamètre compris entre 10 et 0,00001 mm.

3. Utilisation de particules selon la revendication 1 ou 2 dans des solvants organiques, dans des formulations pour la protection de plantes, pour le traitement de graines ou pour le traitement de pesticides.

Fig. 1A): Galvanische Abscheidung von Diamantteilchen ohne Oberflächenbeschichtung

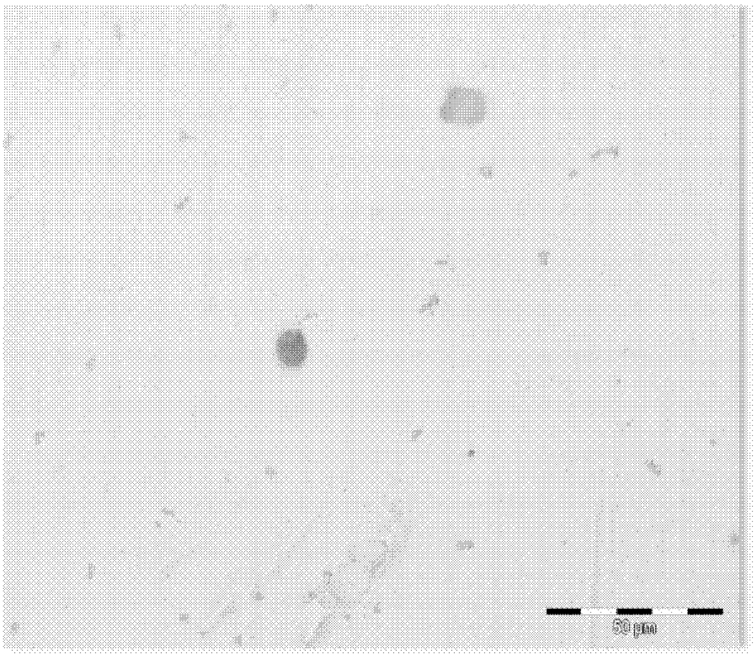


Fig. 1 B): Galvanische Abscheidung von Diamantteilchen mit Beschichtung aus einem nicht-ampholytischen, quaternierbaren Polymer (Lupasol® WF)

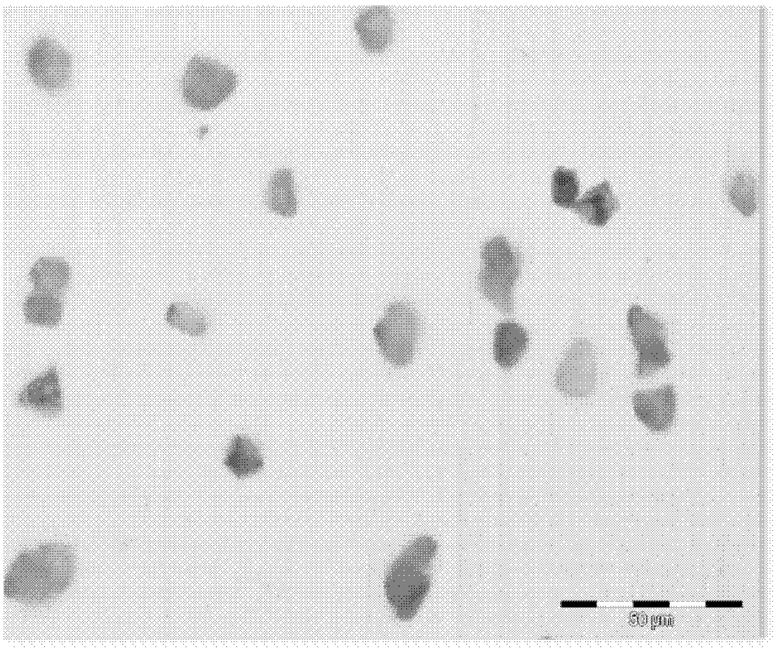

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4098654 A
- US 4302374 A
- US 145517 A
- EP 2100912 A1
- WO 2009115506 A2
- DE 2903612
- GB 1500581 A
- GB 2058059 A
- DE 1198125
- DE 2752096
- EP 281842 A
- DE 1164152
- DD 151404 A
- EP 224339 A
- EP 310550 A
- DE 2324020
- US 4664696 A
- GB 2098607 A
- EP 196038 A
- EP 15756 A
- EP 267778 A
- GB 857383 A
- BE 835579
- US 3991071 A
- WO 9616048 A
- EP 40345 A
- EP 234242 A
- BE 793867
- DE 2324010
- JP 54119462 A
- FR 2641277
- GB 1312536 A
- US 3903090 A
- DE 2207576 A
- US 1972961 A
- US 2317765 A
- US 2504404 A
- GB 996264 A
- US 2791605 A
- US 3248400 A
- BE 611960
- DE 642532
- US 2457674 A
- US 2720480 A
- US 3631176 A
- EP 545099 A
- US 3657443 A
- US 3249499 A
- US 3399214 A
- GB 1218623 A
- DE 1209799
- JP 1104514 A
- US 3937840 A
- WO 9942447 A
- WO 9748684 A
- EP 49854 A
- GB 13943373 A
- US 5240940 A
- US 3017415 A
- DE 1930540 A
- DE 1901421
- US 2526660 A
- JP 9323984 A
- US 3290353 A
- WO 9619442 A
- US 3957847 A
- US 4052395 A
- EP 78663 A
- DE 1493736
- EP 639574 A
- US 3499086 A
- EP 262393 A
- FR 2254276
- EP 472996 A
- US 5945567 A
- DE 2732257
- JP 10130268 B
- DE 1567169
- DE 1643347
- GB 1467561 A
- DE 682048
- EP 382375 A
- EP 477631 A
- EP 936213 A
- WO 9727189 A
- EP 253213 A
- EP 398692 A
- WO 9715552 A
- EP 278595 A
- WO 9601256 A
- EP 460575 A
- US 2553770 A
- DE 1193498
- EP 120321 A
- EP 860438 A
- CN 1939128
- EP 141317 A
- EP 152031 A

- EP 226917 A
- EP 243970 A
- EP 256503 A
- EP 428941 A
- EP 532022 A
- EP 1028125 A
- EP 1035122 A
- EP 1201648 A
- EP 1122244 A
- JP 2002316902 B
- DE 19650197
- DE 10021412
- DE 102005009458
- US 3296272 A
- US 3325503 A
- WO 9846608 A
- WO 9914187 A
- WO 9924413 A
- WO 9927783 A
- WO 0029404 A
- WO 0046148 A
- WO 0065913 A
- WO 0154501 A
- WO 0156358 A
- WO 0222583 A
- WO 0240431 A
- WO 0310149 A
- WO 0311853 A
- WO 0314103 A
- WO 0316286 A
- WO 0353145 A
- WO 0361388 A
- WO 0366609 A
- WO 0374491 A
- WO 0449804 A
- WO 0483193 A
- WO 05120234 A
- WO 05123689 A
- WO 05123690 A
- WO 0563721 A
- WO 0587772 A
- WO 0587773 A
- WO 0615866 A
- WO 0687325 A
- WO 0687343 A
- WO 0782098 A
- WO 0790624 A
- WO 11028657 A
- WO 2012168188 A
- WO 2007006670 A
- WO 201177514 A
- WO 13047749 A
- WO 10069882 A
- WO 13047441 A
- WO 0316303 A
- WO 0990181 A
- WO 13007767 A
- WO 13010862 A
- WO 13127704 A
- WO 13024009 A
- WO 13024010 A
- WO 2013047441 A
- WO 13162072 A
- WO 13092224 A
- US 8445255 B
- US 20130236522 A1
- US 2011023045 A1
- US 20120149571 A1
- US 6406690 B
- US 5733544 A
- WO 2009126473 A
- WO 2009124707 A
- US 20140051571 A1
- US 5906818 A
- WO 2014029697 A
- US 20100260735 A
- WO 2011109395 A
- WO 2013087709 A
- EP 0585215 B1
- EP 585215 B1
- US 200020031495 A
- US 5021076 A
- US 7262151 B
- WO 2013032693 A
- WO 1996021358 A
- WO 200357861 A
- WO 2013138398 A
- US 5002603 A
- US 6890525 B
- US 8221736 B
- WO 2012018266 A
- US 6994849 B
- US 20140086879 A1
- WO 2013110594 A
- WO 199102051 A
- WO 2010085795 A
- WO 2012064527 A
- WO 201080619 A
- US 5248500 A
- WO 2010080619 A
- US 5026417 A
- WO 1995017806 A
- WO 2010037228 A
- US 8206972 B
- WO 200140441 A
- EP 0210734 A
- WO 20040245865 A
- US 20130035230 A
- EP 0307510 B1
- WO 2011022809 A
- WO 2012135763 A
- US 5403584 A
- US 5968503 A
- EP 0133878 B1
- EP 0466133 B2
- CA 2471555 A1

- US 7429477 B
- US 4996157 A

**In der Beschreibung aufgeführte Nicht-Patentliteratur**


- *CHEMICAL ABSTRACTS,* 58810-48-3
- *Plant Dis. Rep.,* 1957, vol. 41, 1029
- *Congr. Plant Pathol.,* 1968, vol. 1, 27
- *CHEMICAL ABSTRACTS,* 66-81-9
- *J. Am. Chem. Soc.,* 1947, vol. 69, 1234
- *Proc. Br. Crop. Prot. Conf. 1990 - Pests Dis.,* 1990, vol. 1, 459
- *Noyaku Kagaku,* 1983, vol. 8, 575
- *Fruits,* 1973, vol. 28, 545
- *Proc. Br. Crop Prot. Conf. 1988 - Pests Dis.,* 1988, vol. 1, 33
- *Proc. Br. Crop Prot. Conf.-Pests Dis.,* 1992, vol. 5-3, 411
- *Proc. Br. Crop Prot. Conf.-Pests Dis.,* 1984, vol. 1, 413
- Pesticide Manual. 2000, 712
- *CHEMICAL ABSTRACTS,* 149508-90-7
- *Bull. Soc. Chim. Fr.,* vol. 15, 891
- *Proc. Insectic. Fungic. Conf. 8,* 1975, vol. 2, 715
- *Agric. Biol. Chem.,* 1973, vol. 37, 737
- *CHEMICAL ABSTRACTS,* 175217-20-6
- *CHEMICAL ABSTRACTS,* 41814-78-2
- *Proc. Br. Insectic. Fungic. Conf. 7,* 1973, vol. 2, 673
- *Proc. 1988 Br. Crop Prot. Conf. - Pests Dis.,* vol. 1, 65
- The Pesticide Manual. The British Crop Protection Council, 1995, 482
- *CHEMICAL ABSTRACTS,* 104030-54-8
- *Proc. Br. Crop Prot. Conf. - Pests Dis.,* 1998, vol. 2, 327
- The Pesticide Manual. The British Crop Protection Council, 1995, 474
- *C. R. Seances Acad. Agric. Fr.,* 1945, vol. 31, 24
- *CHEMICAL ABSTRACTS,* 156052-68-5
- *Phytopathology,* 1962, vol. 52, 754
- *AGROW,* 1995, 22
- *Can. J. Plant Sci.,* 1968, vol. 48 (6), 587-94
- e-Pesticide Manual V 5.2. 2008
- *Bio-Pesticides Database BPDB, http://sitem.herts.ac.uk/aeru/bpdb/*
- *Nature,* 1979, vol. 280, 697-699
- Proc. 9th Int. und 1st Latin American PGPR meeting. Quimara, 2012, 60
- *Eur. J. Soil Biol,* 2009, vol. 45 (1), 28-35
- *Plant Soil,* 2010, vol. 331, 413-425
- *Int. J. Syst. Evol. Microbiol.,* 2006, vol. 56 (7), 1465-1473
- *J. Microbiol. Biotechnol.,* 2007, vol. 17 (2), 280-286
- *J. Plant Dis. Prot.,* 1998, vol. 105, 181-197
- *Phytopathol.,* 1996, vol. 86 (11), 36
- *Int. J. Microbiol. Res.,* 2011, vol. 3 (2), 120-130
- *Federal Register,* vol. 77 (7), 1633-1637
- *System. Appl. Microbiol.,* 2004, vol. 27, 372-379
- *J. Appl. Microbiol.,* 2006, vol. 100 (5), 1063-72
- *FEMS Microbiol. Letters,* 2010, vol. 303 (2), 123-131
- *Revista Brasileira de Ciencia do Solo,* 2011, vol. 35 (3), 739-742
- **BISSON ; MASON.** Projektbericht. Worcester Polytechnic Institute, 29. April 2010
- *Appl. Environ. Microbiol.,* 2007, vol. 73 (8), 2635
- *Can. J. Plant. Sci.,* 1990, vol. 70, 661-666
- *Eur. J. Soil Biol.,* 2009, vol. 45, 28-35
- *Biol. Fertil. Soils,* 2011, vol. 47, 81-89
- *C. R. Acad. Agric. Fr.,* 1987, vol. 73, 163-171
- *Appl. Environ. Microbiol.,* 1990, vol. 56, 2399-2403
- *Appl. Environ. Microbiol.,* 1994, vol. 60, 940-94
- *Crop Science,* 1986, vol. 26 (5), 911-916
- Proceed. 12th International Lupin Conference. International Lupin Association, 14. September 2008, 47-50
- *Appl. Environ. Microbiol.,* 2005, vol. 71, 7041-7052
- *Australian J. Exp. Agricult.,* 1996, vol. 36 (1), 63-70
- *Phytoparasitica,* 1995, vol. 23 (3), 231-234
- *Biological Control,* 2009, vol. 51, 403-408
- Pest, disease and weed management in strawberry. *NJF seminar No 389,* 2006, vol. 2 (10), 15-15
- *Microbiol. Reviews,* 1992, vol. 56 (4), 561-576
- *J. Ecological Engineering,* 2013, vol. 14 (1), 48-52
- *Appl. Environ. Microbiol,* 2002, vol. 68 (8), 4044-4060
- *Prevention Today,* 2006, vol. 2 (1-2), 47-62
- *Science,* 1992, vol. 257, 85-88
- *J. Invertebrate Pathol.,* 2011, vol. 107, 112-126
- *Biocontrol Science Technol.,* 2012, vol. 22 (7), 747-761
- *Biological Control,* 2008, vol. 45, 288-296
- *Curr. Microbiol.,* 2009, vol. 59 (6), 608-615
- *Microbiol. Res.,* 2003, vol. 158, 107-115
- *Biological Control,* 2004, vol. 31 (2), 145-154
- *Soil Biol. Biochem.,* 2004, vol. 36 (8), 1309-1317
- *Plant and Soil,* 2011, vol. 348 (1-2), 231-243
- *Can. J. Microbiol.,* 2002, vol. 48, 279-284

- *World J. Microbiol. Biotechn.,* 2007, vol. 23 (6), ISSN 0959-3993, 845-851
- *Memoirs of the Entomological Society of Canada,* 1997, vol. 171, 287-300
- *Mycologia,* 2002, vol. 94 (2), 297-301
- *Braz. Arch. Biol. Technol.,* 2003, vol. 46 (1), 13-19
- *Crop Protection,* 2008, vol. 27, 352-361
- *Acta agriculturae Slovenica,* 2013, vol. 101 (2), 263-275
- *Can. J. Microbiol.,* 2002, vol. 48 (2), 159-169
- *Phytopathol.,* 2011, vol. 101 (10), 1234-41
- *Trees,* 2012, vol. 26, 227-238
- *J. Bacteriol.,* 2010, vol. 192 (24), 6486-6487
- *Federal Register,* 02. Februar 2011, vol. 76 (22), 5808
- *J. Nematol.,* 2010, vol. 42 (2), 87-90
- *J. NEMATOL.,* 2011, vol. 43 (2), 101-109
- *Fertilizer Res.,* 1994, vol. 39, 97-103
- *Can. J. Plant Sci.,* 1998, vol. 78 (1), 91-102
- *Microbiology Monographs,* 2011, vol. 18, 21-43
- *Phytopathol,* 2007, vol. 97 (2), 244-249
- *Mol. Plant Microbe Interact.,* 1992, vol. 5 (1), 4-13
- *J. Invertebr. Pathol.,* 2013, vol. 113 (1), 104-14
- *Int. J. Syst. Bacteriol.,* 1996, vol. 46 (1), 240-244
- *Int. J. Syst. Evol. Microbiol.,* 2000, vol. 50, 159-170
- *Proc. New Zealand Grassland Assoc.,* 1994, vol. 56, 101-105
- *Microbiol.,* 2007, vol. 153, 3184-3195
- Nodulaid® Torf für Esparsette. Inoculating Legumes: A Practical Guide. BASF Agricultural Specialties Pty Ltd, 2012
- *Appl. Environ. Microbiol.,* 1982, vol. 44 (5), 1096-1101
- *Appl. Environ. Microbiol.,* 1985, vol. 49 (1), 127-131
- *Stand. Genomic Sci.,* 2010, vol. 2 (3), 347-356
- Nodulaid® Torf für Weißklee und Nodulator® granules für Erdklee. Inoculating Legumes: A Practical Guide. BASF Agricultural Specialties Pty Ltd, 2012
- *Stand. Genomic Sci.,* 2010, vol. 2 (1), 66-76
- *New Phytol.,* 2007, vol. 176, 680-690
- *NEW PHYTOL.,* 2008, vol. 179 (1), 224-235
- *Agronomy, N.Z.,* 2006, vol. 36, 4-35
- *Rev. Ciênc. Agron.,* Oktober 2013, vol. 44 (4
- *Appl. Microbiol. Biotechnol.,* 2012, vol. 93 (5), 2035-49
- *Soil Biology & Biochemistry,* 2007, vol. 39, 867-876
- *BMC Microbiol.,* 2012, vol. 12, 84
- *Mol. Gen. Genomics,* 2004, vol. 272, 1-17
- *Crop Protection,* 2006, vol. 25, 468-475
- *J. Gen. Plant Pathol.,* 2005, vol. 71 (5), 351-356
- *BioControl,* 2012, vol. 57, 687-696
- *J. Biological Control,* 2009, vol. 23 (1), 31-36
- *Agronomy,* 2013, vol. 3, 632-647